# EUROPEAN PATENT APPLICATION

(11) **EP 4 401 293 A1**
(43) Date of publication of application: **17.07.2024**
(21) Application number: 21961936.8
(22) Date of filing: 29.10.2021
(51) Int. Cl.: H02M 3/156

(54) **POWER CONVERTER, POWER ADAPTER, ELECTRONIC DEVICE AND POWER CONVERSION METHOD**

(71) Applicant: Huawei Digital Power Technologies Co., Ltd., Shenzhen, Guangdong 518043 (CN)
(72) Inventor: QIN, Junliang, Shenzhen, Guangdong 518043 (CN); SONG, Shuchao, Shenzhen, Guangdong 518043 (CN); YU, Guolei, Shenzhen, Guangdong 518043 (CN)
(74) Representative: Gill Jennings & Every LLP
(86) International application number: PCT/CN2021/127677
(87) International publication number: WO 2023/070584

(57) **Abstract**

A power converter, a power adapter, an electronic device, and a power conversion method are provided to enable an output voltage of a conversion circuit to meet a requirement of a load. The power converter includes a first conversion circuit and a control apparatus connected to the first conversion circuit. The control apparatus may be configured to: detect an output voltage of the first conversion circuit to obtain a voltage value of a first voltage; generate a slope compensation signal based on the voltage value of the first voltage; obtain an error signal based on an error between the voltage value of the first voltage and a voltage value of a reference voltage; compare the slope compensation signal with the error signal to obtain a comparison signal; and generate a drive signal of the first conversion circuit based on the comparison signal.

## Description

### TECHNICAL FIELD

This application relates to the field of power electronics, and in particular, to a power converter, a power adapter, an electronic device, and a power conversion method.

### BACKGROUND

A buck conversion circuit is one of the common conversion circuit topologies, and is used in many types of power systems because the buck conversion circuit can be used to reduce a quantity of passive devices and sizes of the passive devices. For example, a voltage conversion circuit in a power system such as a power management system, a photovoltaic power generation system, a communication power supply system, and a data center of an electric/hybrid vehicle usually needs to use a three-level buck conversion circuit to implement voltage conversion.

Currently, a buck conversion circuit mostly uses a voltage control manner, that is, a drive signal of a switch in the buck conversion circuit is determined based on an output voltage of the buck conversion circuit, to control a working state of the buck conversion circuit. However, in the foregoing voltage control manner, a clock period of a control apparatus for generating the drive signal of the switch is fixed. Therefore, a period of the drive signal is fixed. When a load changes, a state of the switch cannot be adjusted in time, and an output voltage fails to meet a requirement of the load.

### SUMMARY

This application provides a power converter, a power adapter, an electronic device, and a power conversion method, so that a working state of a conversion circuit can be adjusted in time based on a status of a load, and an output voltage meets a requirement of the load.

According to a first aspect, this application provides a power converter. The power converter includes a first conversion circuit and a control apparatus connected to the first conversion circuit. The control apparatus may control a working state of the first conversion circuit.

Specifically, the control apparatus may detect an output voltage of the first conversion circuit, to obtain a voltage value of a first voltage; generate a slope compensation signal based on the voltage value of the first voltage; amplify an error between the voltage value of the first voltage and a voltage value of a reference voltage to obtain an error signal; compare the slope compensation signal with the error signal to obtain a comparison signal; and generate a drive signal of the first conversion circuit based on the comparison signal.

By using the foregoing power converter, slope compensation may be performed based on the voltage value of the first voltage to obtain the slope compensation signal, and an amplitude of the slope compensation signal after slope compensation is changed, resulting in an offset at a moment at which a difference between the slope compensation signal and the error signal is zero, thereby changing a level flipping moment of the comparison signal. Correspondingly, a moment at which the drive signal is generated also changes, so that the drive signal can be adjusted in time based on a status of a load.

In actual conditions, the control apparatus may include a detection circuit, an amplification circuit, a slope compensation circuit, a comparison circuit, and a signal generation circuit.

An input end of the detection circuit is connected to an output end of the first conversion circuit, an output end of the detection circuit is connected to the slope compensation circuit and the amplification circuit, and the detection circuit is configured to: detect the output voltage of the first conversion circuit to obtain the voltage value of the first voltage, and output the voltage value of the first voltage to the slope compensation circuit and the amplification circuit. The amplification circuit is connected to the comparison circuit, and the amplification circuit is configured to: amplify an error between the voltage value of the first voltage and the voltage value of the reference voltage to obtain the error signal, and output the error signal to the comparison circuit. The slope compensation circuit is connected to the comparison circuit, and the slope compensation circuit is configured to generate the slope compensation signal based on the voltage value of the first voltage. The comparison circuit is connected to the signal generation circuit, and the comparison circuit is configured to: compare the slope compensation signal with the error signal to obtain the comparison signal, and output the comparison signal to the signal generation circuit. The signal generation circuit is configured to generate the drive signal of the first conversion circuit based on the comparison signal.

According to the power converter provided in this application, the slope compensation circuit may be connected to the detection circuit, and may perform slope compensation based on the voltage value of the first voltage, where the voltage value of the first voltage is output by the detection circuit and represents an output situation of the first conversion circuit. An amplitude of the slope compensation signal obtained after slope compensation changes. As a result, a moment at which a difference between the slope compensation signal and the error signal is zero is shifted, thereby changing a level flipping moment of the comparison signal, and a corresponding moment at which the signal generation circuit sends the drive signal is also changed. Therefore, the drive signal can be adjusted in time based on a status of a load.

In a possible implementation, the slope compensation circuit includes a slope signal compensation module and a control module.

The slope signal compensation module is separately connected to the detection circuit and the control module, and the slope signal generation module is configured to generate the slope compensation signal based on the voltage value of the first voltage. The control module is connected to the comparison circuit, and the control module controls a working state of the slope signal compensation module based on the comparison signal.

By using the foregoing control apparatus, a slope signal compensation apparatus may perform slope compensation based on the voltage value of the first voltage, to obtain a slope compensation signal whose slope and amplitude meet requirements.

In a possible implementation, the slope signal compensation module includes a first switch S1, a second switch S2, a third switch S3, a first current source I1, a second current source I2, and a first capacitor C1.

A first electrode of the first switch S1 is configured to be connected to a first power supply VCC 1, and a second electrode of the first switch S1 is connected to a first end of the first current source I1. A second end of the first power source I1 is connected to a first end of the first capacitor C1, a first electrode of the second switch S2, and a first electrode of the third switch S3. A second electrode of the second switch S2 is connected to a second end of the first capacitor C1. A second electrode of the third switch S3 is connected to a first end of the second current source I2. A second end of the second current source I2 is connected to the second end of the first capacitor C1. The second end of the first capacitor C1 is connected to the output end of the detection circuit, and the first end of the first capacitor C1 is connected to the comparison circuit. A control electrode of the first switch S 1, a control electrode of the second switch S2, and a control electrode of the third switch S3 are all connected to a first control module.

The slope compensation signal is output by controlling charging and discharging of the first capacitor C1. The slope compensation signal is superimposed on the voltage value of the first voltage that represents the output situation of the first conversion circuit, and the amplitude of the slope compensation signal is changed. Therefore, a moment at which a difference between the slope compensation signal and the error signal is zero is earlier, and a sending moment of a corresponding drive signal is earlier. After the drive signal is used, the output voltage of the first conversion circuit can meet a requirement of a load.

In a possible implementation, the control module includes a first RS flip-flop RS 1, a second RS flip-flop RS 2, a first timer TD 1, a second timer TD 2, and a first phase inverter Z1.

A first end of the first RS flip-flop RS 1 is connected to the comparison circuit, a second end of the first RS flip-flop RS 1 is connected to a first end of the first timer TD 1, and an output end of the first RS flip-flop RS 1 is connected to the control electrode of the first switch S1, an input end of the first phase inverter Z1, and a second end of the first timer TD 1. A first end of the second RS flip-flop RS 2 is connected to the comparison circuit, a second end of the second RS flip-flop RS 2 is connected to a first end of the second timer TD 2, and an output end of the second RS flip-flop RS 2 is connected to the control electrode of the second switch S2 and a second end of the second timer TD 2. An output end of the first phase inverter Z1 is connected to the control electrode of the third switch S3.

By using the foregoing control apparatus, a working state of a switch in the slope signal compensation module may be controlled, to control the first capacitor C1 to perform charging and discharging, and generate the slope compensation signal.

In a possible implementation, the control module includes a third RS flip-flop RS 3, a fourth RS flip-flop RS 4, a fifth RS flip-flop RS 5, a third timer TD 3, a fourth timer TD 4, and a fifth timer TD 5.

A first end of the third RS flip-flop RS 3 is connected to the comparison circuit, a second end of the third RS flip-flop RS 3 is connected to a first end of the third timer TD 3 and a first end of the fourth timer TD 4, and an output end of the third RS flip-flop RS 3 is connected to the control electrode of the first switch S1 and a second end of the third timer TD 3. A first end of the fourth RS flip-flop RS 4 is connected to a second end of the fourth timer TD 4, a second end of the fourth RS flip-flop RS 4 is connected to the comparison circuit, and an output end of the fourth RS flip-flop RS 4 is connected to the control electrode of the third switch S3. A first end of the fifth RS flip-flop RS 5 is connected to the comparison circuit, a second end of the fifth RS flip-flop RS 5 is connected to a first end of the fifth timer TD 5, and an output end of the fifth RS flip-flop RS 5 is connected to the control electrode of the second switch S2 and a second end of the fifth timer TD 5.

By using the foregoing control apparatus, a working state of a switch in the slope signal compensation module may be controlled, to control the first capacitor C1 to perform charging and discharging.

In a possible implementation, the slope signal compensation module includes a fourth switch S4, a fifth switch S5, a sixth switch S6, a second capacitor C2, a third current source I3, a fourth current source I4, and an adder Σ.

A first electrode of the fourth switch S4 is configured to be connected to a second power supply VCC 2, and a second electrode of the fourth switch S4 is connected to a first end of the third current source I3. A second end of the third current source I3 is separately connected to a first end of the second capacitor C2, a first electrode of the ninth switch S5 S9, and a first electrode of the sixth switch S6. A second electrode of the fifth switch S5 is connected to a second electrode of the sixth switch S6. The second electrode of the sixth switch S6 is connected to a first end of the fourth current source I4. A second end of the fourth current source I4 is connected to a second end of the second capacitor C2. The second end of the second capacitor C2 is configured to receive the reference voltage, and the first end of the second capacitor C2 is connected to a first input end of the adder. A second end of the adder is connected to the detection circuit, and an output end of the adder is connected to the comparison circuit. A control electrode of the fourth switch S4, a control electrode of the fifth switch S5, and a control electrode of the sixth switch S6 are all connected to a first control module.

By using the foregoing control apparatus, a second voltage may be superimposed by using the adder to perform slope compensation.

In a possible implementation, the adder includes a fifth current source I5, a seventh switch S7, an eighth switch S8, a ninth switch S9, a tenth switch S10, an eleventh switch S11, a twelfth switch S12, a thirteenth switch S13, a first resistor R1, and a second resistor R2.

A first electrode of the seventh switch S7 is connected to a third power supply VCC 3, a second electrode of the eleventh switch S11 is connected to a first electrode of the tenth switch S10 and a first electrode of the eleventh switch S11, and a control electrode of the seventh switch S7 is connected to a control electrode of the twelfth switch 12 and a control electrode of the ninth switch S9. A first electrode of the eighth switch S8 is connected to the third power supply VCC 3, and a second electrode of the twelfth switch S12 is connected to a first electrode of the twelfth switch S12 and a first electrode of the thirteenth switch S13. A first electrode of the ninth switch S9 is connected to the third power supply VCC 3, and a second electrode of the thirteenth switch S13 is connected to a first end of the fifth current source I5. A second end of the fifth current source I5 is connected to a ground cable. A second electrode of the tenth switch S10 is connected to the comparison circuit and a first end of the first resistor R1, and a control electrode of the tenth switch S10 is connected to the first end of the second capacitor C2. A second electrode of the eleventh switch S11 is connected to the comparison circuit and a first end of the second resistor R2, and a control electrode of the eleventh switch S11 is configured to receive the reference voltage. A second electrode of the twelfth switch S12 is connected to the comparison circuit and the first end of the first resistor R1, and a control electrode of the twelfth switch S12 is connected to the detection circuit. A second electrode of the thirteenth switch S13 is connected to the comparison circuit and the first end of the second resistor R2, and a control electrode of the thirteenth switch S13 is configured to receive the reference voltage. A second end of the first resistor R1 is connected to the ground cable. A second end of the second resistor R2 is connected to the ground cable.

In a possible implementation, the comparison circuit includes a fourteenth switch S 14, a fifteenth switch S15, a sixteenth switch S16, and a first comparator COMP 1.

A first electrode of the fourteenth switch S14 is connected to the third power supply VCC 3, a second electrode of the fourteenth switch S14 is separately connected to a first electrode of the fifteenth switch S15 and a first electrode of the sixteenth switch S16, and a control electrode of the fourteenth switch S14 is connected to a control electrode of the seventh switch S7. A second electrode of the fifteenth switch S 15 is connected to a first input end of the first comparator COPM 1, and a control electrode of the fifteenth switch S15 is configured to receive a reference signal. A second electrode of the sixteenth switch S16 is connected to a second input end of the first comparator COMP 1, and a control electrode of the sixteenth switch S16 is connected to the amplification circuit. The first input end of the first comparator COMP 1 is connected to the second electrode of the tenth switch S10 and the second electrode of the twelfth switch S12, the second input end of the first comparator COMP 1 is connected to the second electrode of the eleventh switch S11 and the second electrode of the thirteenth switch S13, and an output end of the first comparator COMP 1 is connected to the signal generation circuit.

In a possible implementation, the signal generation circuit includes a frequency division module, a first signal generation module, and a second signal generation module.

An input end of the frequency division module is connected to the comparison circuit, an output end of the frequency division module is connected to the first signal generation module and the second signal generation module, and the frequency division module is configured to: perform frequency division processing on the comparison signal to obtain a first frequency division signal and a second frequency division signal, output the first frequency division signal to the first signal generation module, and output the second frequency division module to the second signal generation module. The first signal generation module is configured to generate a first drive signal based on the first frequency division signal and a voltage conversion ratio of the first conversion circuit. The second signal generation module is configured to generate a second drive signal based on the second frequency division signal and the voltage conversion ratio of the first conversion circuit. The drive signal of the first conversion circuit includes the first drive signal and the second drive signal.

By using the foregoing control apparatus, the first conversion circuit includes a plurality of switches, and the first drive signal may be generated by using the first signal generation module, and the second drive signal may be generated by using the second signal generation module.

In a possible implementation, the first signal generation module includes a first on-time control module and a first logic module.

The first on-time control module is connected to an input end of the first conversion circuit, the output end of the first conversion circuit, and the frequency division module, and the first on-time control module is configured to: after receiving the first frequency division signal, generate a first on-time control signal based on a comparison result between an input voltage of the first conversion circuit and the output voltage of the first conversion circuit. The first logic module is separately connected to the first on-time control module and the frequency division module, and generates the first drive signal based on the first on-time control signal and the first frequency division signal. The second signal generation module includes a second on-time control module and a second logic module. The second on-time control module is connected to the input end of the first conversion circuit, the output end of the first conversion circuit, and the frequency division module, and the second on-time control module is configured to: after receiving the second frequency division signal, generate a second on-time control signal based on the comparison result between the input voltage of the first conversion circuit and the output voltage of the first conversion circuit. The second logic module is separately connected to the second on-time control module and the frequency division module, and generates the second drive signal based on the second on-time control signal and the second frequency division signal.

By using the foregoing control apparatus, duty cycles of the first drive signal and a fourth drive signal may be controlled by using the first on-time control module, and duty cycles of the second drive signal and a third drive signal may be controlled by using the second on-time control module.

In a possible implementation, the first on-time control module includes a third resistor R3, a fourth resistor R4, a fifth resistor R5, a seventeenth switch S17, a third capacitor C3, a second comparator COMP 2, an eighth RS flip-flop RS 8, and an eighth timer TD 8.

A first end of the third resistor R3 is connected to the output end of the first conversion circuit, and a second end of the third resistor R3 is connected to a first end of the fourth resistor R4. The first end of the fourth resistor R4 is connected to a first input end of the second comparator COMP 2, and a second end of the fourth resistor R4 is connected to the ground cable. A first end of the fifth resistor R5 is connected to the input end of the first conversion circuit, and a second end of the fifth resistor R5 is connected to a first electrode of the seventeenth switch S 17 and a first end of the third capacitor C3. The first end of the third capacitor C3 is connected to a second input end of the second comparator COMP 2, and a second end of the third capacitor C3 is connected to the ground cable. A second electrode of the seventeenth switch S17 is connected to the ground cable, and a control circuit of the seventeenth switch S17 is connected to an output end of the eighth RS flip-flop RS 8. An output end of the second comparator COMP 2 is connected to the first logic module and a first end of the eighth timer TD 8. A first input end of the eighth RS flip-flop RS 8 is connected to the output end of the frequency division module, and a second input end of the eighth RS flip-flop RS 8 is connected to a second end of the eighth timer TD 8.

In a possible implementation, if the first conversion circuit is a two-level conversion circuit, the first logic module includes a ninth RS flip-flop RS 9.

A first input end of the ninth RS flip-flop RS 9 is connected to the output end of the frequency division module, a second input end of the ninth RS flip-flop RS 9 is connected to the first on-time control module, and an output end of the ninth RS flip-flop RS 9 is configured to: connect to a first group of switches of the first conversion circuit, and output the first drive signal to the first group of switches. The first group of switches is configured to control inductor charging in the first conversion circuit.

In a possible implementation, if the first conversion circuit is a three-level conversion circuit, the first logic module includes a tenth RS flip-flop RS 10 and a third phase inverter Z3.

Specifically, a first input end of the tenth RS flip-flop RS 10 is connected to the output end of the frequency division module, a second input end of the tenth RS flip-flop RS 10 is connected to the first on-time control module, and an output end of the tenth RS flip-flop RS 10 is configured to: connect to the first group of switches of the first conversion circuit, and output the first drive signal to the first group of switches. An input end of the third phase inverter Z3 is connected to the output end of the tenth RS flip-flop RS 10, and an output end of the third phase inverter Z3 is connected to a third group of switches, and outputs a third drive signal to the third group of switches.

The first group of switches, a second group of switches, the third group of switches, and a fourth group of switches are connected in series, a first end of a first switch is a first input end of the first conversion circuit, and a second end of the fourth group of switches is a second output end of the first conversion circuit. The first drive signal received by the first group of switches, the second drive signal received by the second group of switches, the third drive signal received by the third group of switches, and a fourth drive signal received by the fourth group of switches form the drive signal of the first conversion circuit. In a possible design, the control apparatus for the conversion circuit is further connected to at least one second conversion circuit, an output end of each second conversion circuit is connected in parallel to the output end of the first conversion circuit, and the signal generation circuit further includes a third signal generation module and a fourth signal generation module that correspond to each second conversion circuit.

The frequency division module is connected to each third signal generation module and each fourth signal generation module, and the frequency division module is further configured to: perform frequency division processing on the comparison signal, and obtain a third frequency division signal that one-to-one corresponds to each third signal generation module and a fourth frequency division signal that one-to-one corresponds to each fourth signal generation module. Each third signal generation module is connected to the frequency division module, and the third signal generation module is configured to: receive a corresponding third frequency division signal, and generate a fifth drive signal based on the received third frequency division signal and a voltage conversion ratio of a corresponding second conversion circuit. The fourth signal generation module is connected to the frequency division module, and the fourth signal generation module is configured to: receive a corresponding fourth frequency division signal, generate a sixth drive signal based on the received fourth frequency division signal and a voltage conversion ratio of a corresponding second conversion circuit, and output the fifth drive signal and the sixth drive signal to corresponding second conversion circuits.

By using the foregoing control apparatus, in a scenario in which output ends of a plurality of conversion circuits are connected in parallel, output voltages of the plurality of conversion circuits are equal. To use fewer control apparatuses for the conversion circuits, a control apparatus may be used to control working states of the plurality of conversion circuits.

In a possible implementation, the control apparatus provided in embodiments of this application further includes a voltage divider circuit.

An input end of the voltage divider circuit is connected to the output end of the first conversion circuit, an output end of the voltage divider circuit is connected to the input end of the detection circuit, and the voltage divider circuit is configured to: perform voltage step-down processing on the output voltage of the first conversion circuit to obtain the first voltage, and output the first voltage to the detection circuit.

By using the foregoing control apparatus, because larger processing voltage values of a plurality of components in the control apparatus indicate higher processing difficulty and higher processing costs of the components. To control costs of the components in the apparatus, voltage step-down processing may be first performed on a to-be-detected voltage, to reduce subsequent data processing difficulty of the control apparatus.

According to a second aspect, this application provides a power conversion method. The power conversion method may be applied to a power conversion apparatus. Specifically, the power conversion method includes the following steps: detecting an output voltage of a conversion circuit to obtain a voltage value of a first voltage; generating a slope compensation signal based on the voltage value of the first voltage; obtaining an error signal based on an error between the voltage value of the first voltage and a voltage value of a reference voltage; comparing the slope compensation signal with the error signal to obtain a comparison signal; and generating a drive signal of the conversion circuit based on the comparison signal.

According to the foregoing method, the slope compensation signal may be generated based on the voltage value of the first voltage, where the voltage value of the first voltage represents a load power supply situation. A moment at which a level state of the error signal obtained based on a difference between the slope compensation signal and the error signal flips changes, and a sending moment of a generated corresponding drive signal changes. In this way, a state of the conversion circuit changes, and the output voltage of the conversion circuit meets a requirement of a load.

In a possible implementation, the generating a slope compensation signal based on the voltage value of the first voltage includes: superposing the voltage value of the first voltage and a slope signal to obtain the slope compensation signal.

According to the foregoing method, the voltage value of the first voltage that represents a power supply status of the load is superimposed on the slope signal, to obtain the slope compensation signal. If an amplitude of the slope compensation signal changes, a difference between the slope compensation signal and the error signal changes, and a sending moment of a corresponding drive signal changes.

In a possible implementation, if the conversion circuit is a two-level conversion circuit, the generating a drive signal of the conversion circuit based on the comparison signal includes: performing frequency division on the comparison signal to obtain a first frequency division signal and a second frequency division signal; generating a first drive signal based on the first frequency division signal and a voltage conversion ratio of the conversion circuit; and generating a second drive signal based on the second frequency division signal and the voltage conversion ratio of the conversion circuit. The drive signal of the conversion circuit includes the first drive signal and the second drive signal.

In a possible implementation, if the conversion circuit is a three-level conversion circuit, the generating a drive signal of the conversion circuit based on the comparison signal includes: performing frequency division on the comparison signal to obtain the first frequency division signal and the second frequency division signal; generating the first drive signal and a third drive signal based on the first frequency division signal and the voltage conversion ratio of the conversion circuit; and generating the second drive signal and a fourth drive signal based on the second frequency division signal and the voltage conversion ratio of the conversion circuit.

According to a third aspect, this application provides a power adapter, where the power adapter includes a housing, a connection port, and the power converter provided in any one of the implementations of the first aspect of this application.

The power adapter may be connected between an electronic device and a power supply. The power adapter may convert a voltage output by the power supply into a charging voltage of the electronic device, and output the charging voltage to the electronic device to charge the electronic device.

According to a fourth aspect, this application provides an electronic device. The electronic device includes a battery, a load, and the power converter provided in any one of the implementations of the first aspect of this application.

The power converter is connected to the battery, and the power converter is configured to: convert an output voltage of the battery to obtain a target voltage, and output the target voltage to the load.

### BRIEF DESCRIPTION OF DRAWINGS

FIG. 1 is a schematic diagram of a structure of a three-level buck circuit according to an embodiment of this application;
FIG. 2 is a schematic diagram of fluctuation of a drive signal of a three-level buck circuit according to an embodiment of this application;
FIG. 3 is a schematic diagram of a structure of a control apparatus for a three-level buck circuit according to an embodiment of this application;
FIG. 4 is a first schematic diagram of a structure of a power converter according to an embodiment of this application;
FIG. 5 is a second schematic diagram of a structure of a power converter according to an embodiment of this application;
FIG. 6 is a first schematic diagram of a structure of a slope signal compensation module according to an embodiment of this application;
FIG. 7 is a first schematic diagram of a structure of a control module according to an embodiment of this application;
FIG. 8 is a second schematic diagram of a structure of a control module according to an embodiment of this application;
FIG. 9 is a second schematic diagram of a structure of a slope signal compensation module according to an embodiment of this application;
FIG. 10 is a third schematic diagram of a structure of a control module according to an embodiment of this application;
FIG. 11 is a fourth schematic diagram of a structure of a control module according to an embodiment of this application;
FIG. 12 is a schematic diagram of a structure of an adder according to an embodiment of this application;
FIG. 13 is a schematic diagram of a structure of a comparison circuit according to an embodiment of this application;
FIG. 14 is a schematic diagram of a structure of a signal generation circuit according to an embodiment of this application;
FIG. 15 is a schematic diagram of a structure of a frequency division module according to an embodiment of this application;
FIG. 16 is a schematic diagram of an output waveform of a divide-by-2 frequency divider according to an embodiment of this application;
FIG. 17 is a schematic diagram of a structure of a first signal generation module according to an embodiment of this application;
FIG. 18 is a schematic diagram of a structure of a second signal generation module according to an embodiment of this application;
FIG. 19 is a third schematic diagram of a structure of a power converter according to an embodiment of this application;
FIG. 20 is a schematic diagram of a waveform of a comparison signal according to an embodiment of this application;
FIG. 21 is a fourth schematic diagram of a structure of a power converter according to an embodiment of this application; and
FIG. 22 is a schematic flowchart of a power conversion method according to an embodiment of this application.

### DESCRIPTION OF EMBODIMENTS

The following describes in detail embodiments of this application with reference to accompanying drawings.

A specific operation method in a method embodiment may also be applied to an apparatus embodiment or a system embodiment. It should be noted that in descriptions of this application, "at least one" means one or more, and "a plurality of" means two or more. In view of this, in embodiments of the present invention, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/", unless otherwise specified, generally indicates an "or" relationship between the associated objects. In addition, it should be understood that in the descriptions of this application, terms such as "first" and "second" are merely used for distinguishing and description, but should not be understood as indicating or implying relative importance, or should not be understood as indicating or implying a sequence.

It should be noted that a "connection" in embodiments of this application refers to an electric connection, and a connection between two electrical elements may be a direct or indirect connection between the two electrical elements. For example, a connection between A and B may represent that A and B are directly connected to each other, or A and B are indirectly connected to each other by using one or more other electrical elements. For example, the connection between A and B may also represent that A is directly connected to C, C is directly connected to B, and A and B are connected to each other through C.

It should be noted that a "voltage conversion ratio" in embodiments of this application refers to a ratio between an input voltage and an output voltage of a voltage conversion circuit. If the voltage conversion circuit performs voltage step-down conversion, the output voltage of the voltage conversion circuit is less than the input voltage. That is, the voltage conversion ratio of the voltage conversion circuit is less than 1. If the voltage conversion circuit performs voltage step-up conversion, the output voltage of the voltage conversion circuit is greater than the input voltage. That is, the voltage conversion ratio of the voltage conversion circuit is greater than 1.

It should be noted that a switch in embodiments of this application may be one or more of a plurality of types of switch devices such as a relay, a metal-oxide-semiconductor field-effect transistor (metal-oxide-semiconductor field-effect transistor, MOSFET), a bipolar junction transistor (bipolar junction transistor, BJT), an insulated gate bipolar transistor (insulated gate bipolar transistor, IGBT), a gallium nitride (GaN) field-effect transistor, or a silicon carbide (SiC) power transistor. This is not enumerated in embodiments of this application. Each switch device may include a first electrode, a second electrode, and a control electrode, and the control electrode is configured to control turn-on or turn-off of the switch device. When the switch device is turned on, a current can be transmitted between the first electrode and the second electrode of the switch device. When the switch device is turned off, a current cannot be transmitted between the first electrode and the second electrode of the switch device. A MOSFET is used as an example. A control electrode of the switch device is a gate, a first electrode of the switch device may be a source of the switch device, and a second electrode may be a drain of the switch device. Alternatively, the first electrode may be a drain of the switch device, and the second electrode may be a source of the switch device.

Currently, a power converter is installed in most electronic devices, or an electronic device is connected to the power converter. The power converter in the electronic device may be configured to implement voltage (or current) conversion inside the electronic device, to meet a requirement of the electronic device for a voltage or a current. For example, a direct current to direct current (DC/DC) voltage conversion circuit, a direct current to alternating current (DC/AC) voltage conversion circuit, an alternating current to direct current (AC/DC) voltage conversion apparatus, and the like may separately implement different forms of voltage (or current) conversion. The power converter connected to the electronic device is configured to implement voltage (or current) conversion of a power supply, to meet a requirement of the electronic device for a power supply voltage or a power supply current. For example, a voltage conversion circuit may be an adapter. The electronic device may be an electronic device such as a smartphone, a tablet computer, or a smartwatch, and may support cutting-edge technologies such as 5G and a foldable display.

Generally, a power converter with any function may be implemented by using a step-up chopping boost circuit and a step-down conversion buck circuit. For example, when a buck circuit is used as a DC/DC voltage conversion circuit, the voltage conversion circuit may be referred to as a step-down conversion circuit. Specifically, the buck circuit is a step-down voltage conversion circuit topology. As transmit power of an electronic device gradually increases, the buck circuit is widely used because the buck circuit can be used to implement high power conversion. The buck circuit mainly includes a two-level buck circuit and a three-level buck circuit. The following uses the three-level buck circuit as an example to describe a working principle of the buck circuit.

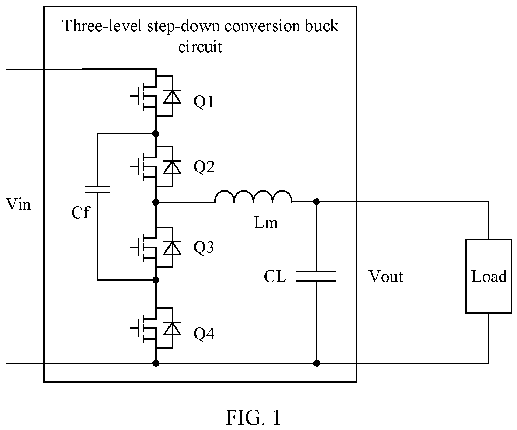

FIG. 1 is a schematic diagram of a structure of a three-level buck circuit. As shown in FIG. 1, the three-level buck circuit mainly includes a first group of switches Q1, a second group of switches Q2, a third group of switches Q3, a fourth group of switches Q4, an output inductor Lm, a flying capacitor Cf, and an output capacitor CL.

A first electrode of the first group of switches Q1 forms a first port of an input end of the three-level buck circuit, and a second electrode of the first group of switches Q1 is connected to a first electrode of the second group of switches Q2. The first electrode of the second group of switches Q2 is connected to a first end of the flying capacitor Cf, and a second electrode of the second group of switches Q2 is connected to a first electrode of the third group of switches Q3. The first electrode of the third group of switches Q3 is connected to a second end of the flying capacitor Cf, and a second electrode of the third group of switches Q3 is connected to a first electrode of the fourth group of switches Q4. A second electrode of the fourth group of switches Q4 forms a second port of the input end of the three-level buck circuit. A first end of the output inductor Lm is connected to the second electrode of the second group of switches Q2, a second end of the output inductor Lm is connected to a first end of the output capacitor CL, and a second end of the output inductor CL is grounded. The first end of the output inductor CL forms a first port of an output end of the three-level buck circuit, and the second end of the output inductor CL forms a second port of the output end of the three-level buck circuit.

A first port of an input end may be an endpoint at which the three-level buck circuit receives a high level, a second port of the input end may be an endpoint at which the three-level buck circuit receives a low level, and the first port and the second port that are of the input end form the input end of the three-level buck circuit. A first port of an output end may be an endpoint at which the three-level buck circuit outputs a high level, a second port of the output end may be an endpoint at which the three-level buck circuit outputs a low level, and the first port and the second port that are of the output end form the output end of the three-level buck circuit.

In actual use, duty cycles of drive signals of the first group of switches Q1 to the fourth group of switches Q4 in the three-level buck circuit may be greater than 0.5. Alternatively, the duty cycles of the drive signals may be greater than 0.5. The three-level buck circuit operates in different manners when the duty cycles of the drive signals are less than 0.5 or greater than 0.5.

With reference to FIG. 1, the following describes in detail a working process of the three-level buck circuit by using an example in which a duty cycle of a drive signal of a switch is less than 0.5.

Specifically, when the duty cycle of the drive signal of the switch in the three-level buck circuit is less than 0.5, the working process of the three-level buck circuit mainly includes the following four phases.

Phase 1: The first group of switches Q1 and the third group of switches Q3 are controlled to be turned on, an input voltage Vin output by an input power supply charges the flying capacitor Cf and the output inductor Lm through the first group of switches Q1 and the third group of switches Q3, the flying capacitor Cf and the output inductor Lm store energy, and a value of a current flowing through the output current Lm gradually increases. Phase 2: When it is determined that an output voltage Vout of the three-level buck circuit reaches a target value, the first group of switches Q1 and the third group of switches Q3 are controlled to be turned off, and the output inductor Lm may perform freewheeling through parasitic diodes of the third group of switches Q3 and the fourth group of switches Q4. As electric energy stored in the output inductor Lm decreases, a value of a current flowing through the output inductor Lm gradually decreases. Phase 3: When it is determined that the output inductor Lm is completely discharged, the second group of switches Q2 and the fourth group of switches Q4 are controlled to be turned on. In this case, the flying capacitor Cf charges the output inductor Lm through the second group of switches Q2 and the fourth group of switches Q4, and the output inductor Lm stores energy. Phase 4: When it is determined that the output voltage Vout of the three-level buck circuit reaches the target value, the second group of switches Q2 and the fourth group of switches Q4 are controlled to be turned off, and the output inductor Lm may perform freewheeling through the parasitic diodes of the third group of switches Q3 and the fourth group of switches Q4. As electric energy stored in the output inductor Lm gradually decreases, a value of a current flowing through the output inductor Lm gradually decreases.

It should be noted that, because there is a phase difference between a signal passing through the output capacitor CL and a signal passing through the output inductor Lm, a voltage value of the output voltage Vout changes later than the value of the current flowing through the output current Lm. That is, when the three-level buck circuit is in the second phase, and the value of the current flowing through the output current Lm reaches an allowed minimum value, switching of the switches is controlled, so that the three-level buck circuit can enter the third phase. In this case, the voltage value of the output voltage Vout continuously decreases, reaches an allowed minimum value after a period of time, and then gradually increases. Therefore, states of the switches need to be switched when the value of the current flowing through the output current Lm reaches the minimum value, and the voltage value of the output voltage reaches the target value.

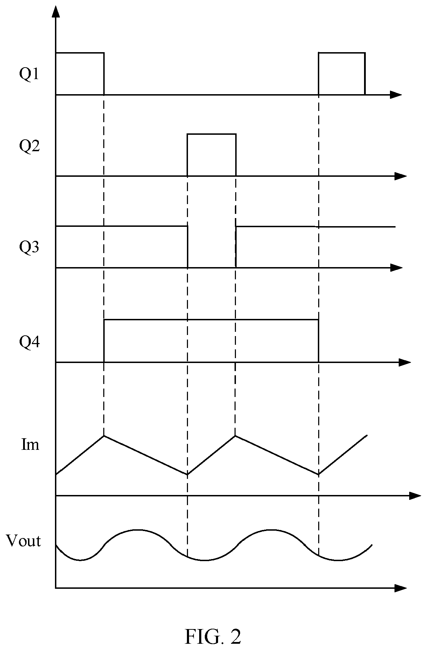

In actual use, when the duty cycle of the drive signal of the switch is less than 0.5, the three-level buck circuit may be controlled to repeatedly perform the foregoing four phases once in a drive signal period of the four switches. When the three-level buck circuit repeatedly performs the foregoing four phases, for a waveform of the current flowing through the output inductor Lm, refer to FIG. 2.

It can be learned that, when the first group of switches Q1 and the third group of switches Q3 are turned on at the same time, the input voltage charges the flying capacitor Cf and the output inductor Lm, and the flying capacitor Cf is in a charging state. When the second group of switches Q2 and the fourth group of switches Q4 are turned on at the same time, the flying capacitor Cf charges the output inductor Lm, and the flying capacitor Cf is in a discharging state.

It can be learned from the foregoing working principle of the three-level buck circuit that, the three-level buck circuit may be controlled to enter a corresponding phase by controlling turn-on moments of the four switches in the control circuit, so that the three-level buck circuit enters different phases; and values of the current flowing through the output current Lm of the three-level buck circuit are different in different phases, and corresponding output voltages of the three-level buck circuit after a delay are different. In actual use, a control electrode of the first group of switches Q1, a control electrode of the second group of switches Q2, a control electrode of the third group of switches Q3, and a control electrode of the fourth group of switches Q4 are all connected to a control apparatus for the three-level buck circuit. The control apparatus can provide suitable drive signals for control circuits of the four switches, and the switches adjust working states under an action of the drive signals.

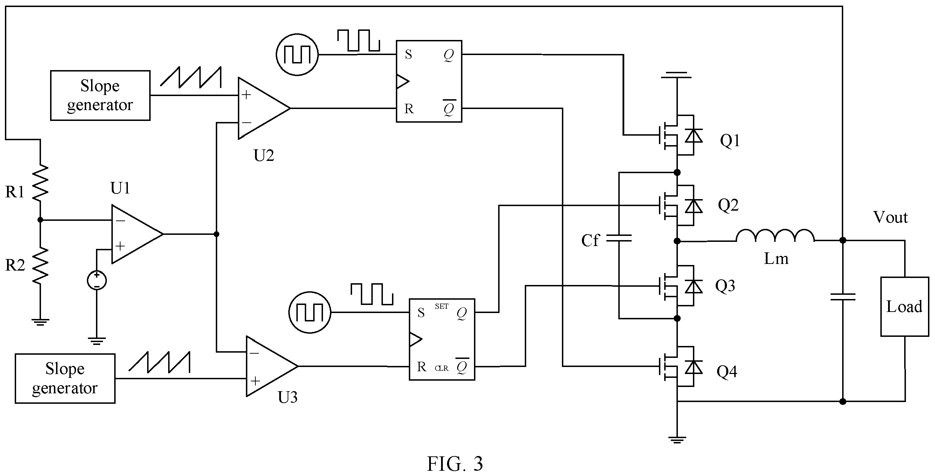

FIG. 3 is a schematic diagram of a structure of the control apparatus for the three-level buck circuit. Refer to FIG. 3. The control apparatus detects a voltage at the output end of the three-level buck circuit, performs voltage step-down processing on the voltage at the output end by using resistors R1 and R2, to obtain a to-be-detected voltage, and then runs an amplifier U1 to amplify an error between the to-be-detected voltage and a reference voltage to obtain an error voltage. Comparators U2 and U3 compare the error voltage output by the U1 with a slope signal output by a slope generator, and output comparison results to RS flip-flops separately connected to back ends of the RS flip-flops. The RS flip-flop provides a drive signal to a corresponding switch.

In a possible implementation, the reference voltage may be a voltage value obtained after voltage step-down processing is performed on a target voltage by the resistors R1 and R2. The target voltage may be a rated working voltage of an electrical device connected to a back end of the three-level buck circuit.

When the foregoing control apparatus is used to control a working state of a switch in the three-level buck circuit, and when the voltage value of the output voltage Vout reaches the target value, a corresponding drive signal is output, so that the switch can switch states. A delay of outputting the error signal by the U1 is long, and a period of the slope signal output by the slope generator is fixed. Therefore, when the output voltage reaches the target value, the corresponding drive signal cannot be output in time, the voltage value of the output voltage Vout continues to decrease after reaching an allowed minimum value, and the output voltage of the three-level buck circuit fails to meet a requirement of a load.

To resolve the foregoing problem, embodiments of this application provide a power converter, a power adapter, an electronic device, and a power conversion method. The power converter may include a first conversion circuit and a control apparatus connected to the first conversion circuit. The control apparatus may adjust, in time based on a status of a load, a drive signal provided for the first conversion circuit, so that an output voltage of the first conversion circuit meets a requirement of the load.

In actual use, a three-level buck circuit shown in FIG. 1 is a possible example of a structure of the first conversion circuit. In actual application, the first conversion circuit has a plurality of possible implementation structures, for example, a two-level buck circuit. This is not enumerated in this application. However, all these step-down buck circuits are applicable to this application.

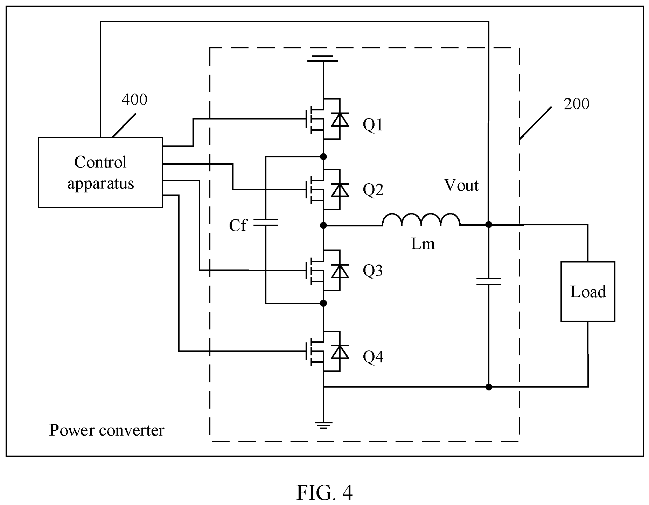

FIG. 4 shows a power converter according to an embodiment of this application. The power converter may include a first conversion circuit 200 and a control apparatus 400 connected to the first conversion circuit. The control apparatus 400 may detect an output voltage of the first conversion circuit 200 to obtain a voltage value of a first voltage; generate a slope compensation signal based on the voltage value of the first voltage; obtain an error signal based on an error between the voltage value of the first voltage and a voltage value of a reference voltage; compare the slope compensation signal with the error signal to obtain a comparison signal; and generate a drive signal of the first conversion circuit 200 based on the comparison signal.

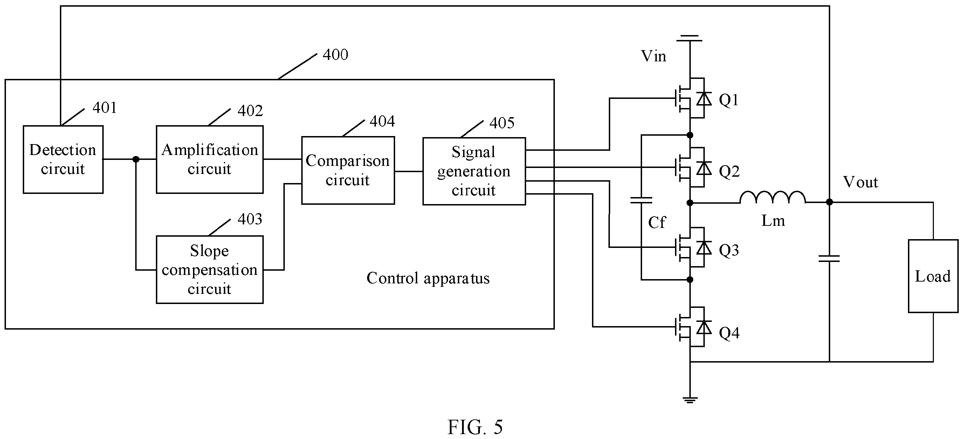

In actual use, as shown in FIG. 5, the control apparatus 400 may include a detection circuit 401, an amplification circuit 402, a slope compensation circuit 403, a comparison circuit 404, and a signal generation circuit 405.

Specifically, an input end of the detection circuit 401 is connected to an output end of the first conversion circuit, and an output end of the detection circuit 401 is connected to the slope compensation circuit 403 and the amplification circuit 402. The amplification circuit 402 is connected to the comparison circuit 404. The slope compensation circuit 403 is connected to the comparison circuit 404. The comparison circuit 404 is connected to the signal generation circuit 405. The signal generation circuit 405 is configured to: connect to the first conversion circuit 200, and provide a drive signal for a switch in the first conversion circuit 200.

The detection circuit 401 may detect a voltage output by the first conversion circuit 200 to obtain the voltage value of the first voltage, and output the voltage value of the first voltage to the slope compensation circuit 403 and the amplification circuit 402. The amplification circuit 402 may amplify the error between the voltage value of the first voltage and the voltage value of the reference voltage to obtain the error signal, and output the error signal to the comparison circuit 404. The slope compensation circuit 403 may generate the slope compensation signal based on the voltage value of the first voltage, and output the slope compensation signal to the comparison circuit 404. The comparison circuit 404 may compare the slope compensation signal with the error signal to obtain the comparison signal, and output the comparison signal to the signal generation circuit 405. The signal generation circuit 405 may generate the drive signal of the first conversion circuit 200 based on the comparison signal.

In actual use, to reduce detection costs of the detection circuit 401 and data processing costs of a component connected to the detection circuit 401, the control apparatus 400 provided in this embodiment of this application may further include a voltage divider circuit. The voltage divider circuit may include a plurality of voltage divider resistors connected in series.

Specifically, an input end of the voltage divider circuit is connected to an output end of the first conversion circuit 200, an output end of the voltage divider circuit is connected to the input end of the detection circuit 401, and the voltage divider circuit may perform voltage step-down processing on the output voltage of the first conversion circuit 200 to obtain the first voltage, and output the first voltage to the detection circuit.

In actual application, the control apparatus 400 may be fastened on the first conversion circuit 200. In another implementation, the control apparatus 400 may alternatively be disposed in a flexible and detachable form, that is, a fixed interface is disposed on the first conversion circuit 200, to connect the control apparatus 400 and the first conversion circuit 200. In this case, the control apparatus 400 may be considered as an apparatus independent of the first conversion circuit 200.

In this application, the control apparatus 400 may adjust a working state of a switch by providing a corresponding drive signal for the switch in the first conversion circuit 200, to control the voltage value of the output voltage of the first conversion circuit 200.

When the control apparatus 400 provided in this embodiment of this application is used to generate the drive signal of the switch in the first conversion circuit 200, the drive signal generation circuit 405 mainly generates the drive signal by using the comparison signal, and the comparison signal is mainly generated based on a comparison result between the error signal and the slope compensation signal. Because the amplification circuit 402 outputs the error signal at a slow speed, slope compensation may be performed based on the voltage value of the first voltage, and an amplitude of the slope compensation signal obtained after the slope compensation changes. As a result, an offset occurs at a moment when a difference between the slope compensation signal and the error signal is zero, thereby changing a level flipping moment of the comparison signal, and also changing a sending moment of a drive signal generated by a corresponding signal generation circuit 405. Therefore, the control apparatus 400 can respond to a change of the output voltage in time and adjust the drive signal accordingly.

Specifically, the control apparatus 400 may be connected to an input power supply connected to the input end of the first conversion circuit 200, and the input power supply may supply power to the control apparatus 400.

It should be understood that, if the control apparatus 400 is directly powered through the input power supply, a voltage output by the input power supply may hardly meet a requirement of the control apparatus 400 for a power supply voltage. Therefore, a direct current converter may be further connected between the input power supply and the control apparatus 400, and the direct current converter performs voltage conversion processing on the voltage output by the input power supply, to output a power supply voltage available to the control apparatus 400.

The following describes specific structures of the detection circuit 401, the amplification circuit 402, the slope compensation circuit 403, the comparison circuit 404, and the signal generation circuit 405 in the control apparatus 400.

### 1. The detection circuit 401

The input end of the detection circuit 401 may be connected to the output end of the voltage divider circuit, the output end of the detection circuit 401 is separately connected to the amplification circuit 402 and the slope compensation circuit 403, and the output end of the voltage divider circuit forms a to-be-detected point, and outputs a voltage value output by the to-be-detected point to the slope compensation circuit 403 and the amplification circuit 402.

Specifically, the detection circuit 401 may be a data transmission line, and directly outputs the voltage value of the to-be-detected point to a connected component.

It should be noted that the foregoing description of a structure of the detection circuit 401 is merely an example. In actual use, the detection circuit 401 provided in this application may further include another structure, for example, a voltage sensor. This is not enumerated in this application.

### 2. The amplification circuit 402

An input end of the amplification circuit 402 is connected to the detection circuit 401, and an output end of the amplification circuit 402 is connected to an input end of the comparison circuit 404. The amplification circuit 402 may amplify the error between the voltage value that is of the first voltage and that is output by the detection circuit 401 and the voltage value of the reference voltage, to obtain the error signal, and output the error signal to the comparison circuit 404.

In an example, the amplification circuit 402 may include an operational amplifier, a non-inverting input end of the operational amplifier receives the reference voltage, an inverting input end of the operational amplifier is connected to the detection circuit 401 and is configured to receive a second voltage output by the detection circuit 401, and an output end of the operational amplifier is connected to the comparison circuit 404 and the slope compensation circuit 403 and is configured to output the error signal.

### 3. The slope compensation circuit 403

The slope compensation circuit 403 is separately connected to the output end of the detection circuit 401 and the input end of the comparison circuit 404. The slope compensation circuit 403 may compensate a slope signal based on the voltage value that is of the first voltage and that is output by the detection circuit 301, to obtain the slope compensation signal, and output the slope compensation signal to the comparison circuit 404.

The slope compensation circuit 403 includes a slope signal compensation module 4031 and a control module 4032.

Specifically, the slope signal compensation module 4031 is separately connected to the output end of the detection circuit 401 and the control module, and the slope signal compensation module 4031 is configured to generate the slope compensation signal based on the second voltage. The control module 4032 is connected to the comparison circuit 404, and the control module 4032 controls a working state of the slope signal compensation module 4032 based on the comparison signal.

Specifically, based on different compensation positions of the slope signal compensation module 4031, the slope signal compensation module in this embodiment of this application has two circuit structures. The following separately describes, with reference to embodiments, slope compensation processes when the two circuit structures are used.

### Embodiment 1

The slope signal compensation module 4031 includes a first switch S1, a second switch S2, a third switch S3, a first current source I1, a second current source I2, and a first capacitor C1.

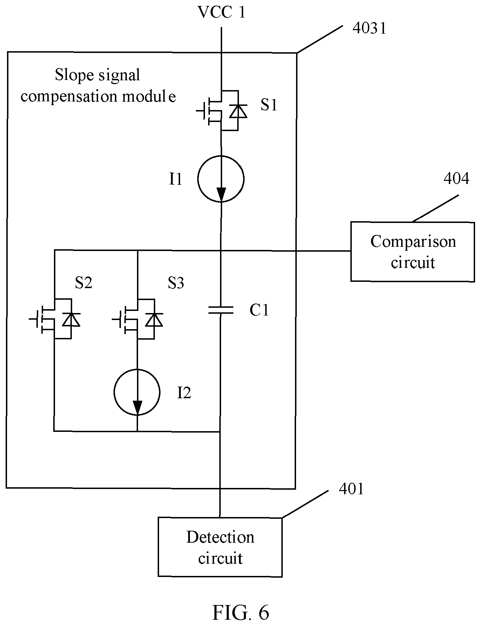

Specifically, as shown in FIG. 6, a first electrode of the first switch S1 is configured to be connected to a first power supply VCC 1, and a second electrode of the first switch S1 is connected to a first end of the first current source I1. A second end of the first power source I1 is connected to a first end of the first capacitor C1, a first electrode of the second switch S2, and a first electrode of the third switch S3. A second electrode of the second switch S2 is connected to a second end of the first capacitor C1. A second electrode of the third switch S3 is connected to a first end of the second current source I2. A second end of the second current source I2 is connected to the second end of the first capacitor C1. The second end of the first capacitor C1 is connected to the output end of the detection circuit 401, and the first end of the first capacitor C1 is connected to the comparison circuit 404. A control electrode of the first switch S1, a control electrode of the second switch S2, and a control electrode of the third switch S3 are all connected to the control module.

In actual use, to isolate the slope compensation signal from the output end of the first conversion circuit 200, a voltage follower is further connected between the second end of the first capacitor C1 and the detection circuit.

By using the foregoing slope signal compensation module, because the second end of the first capacitor C1 is connected to the detection circuit 401, and receives the voltage value that is of the first voltage and that is output by the detection circuit 401, charging and discharging speeds of the first capacitor C1 may be controlled. In this way, when the output voltage of the first conversion circuit 200 reaches a target value, and a sum of a discharging voltage value of the first capacitor C1 and the target value is equal to an amplitude of the error signal, a difference between an amplitude of the slope compensation signal output by the first capacitor C1 and the amplitude of the error signal is zero, and the comparison circuit 404 outputs the comparison signal, and generates a corresponding drive signal to control a working state of the first conversion circuit 200. A period of the slope compensation signal may be consistent with a period of a drive signal of a switch in the first conversion circuit 200.

Specifically, the control electrode of the first switch S1, the control electrode of the second switch S2, and the control electrode of the third switch S3 are all connected to the control module 4032, and the control module 4032 controls working states of the three switches, to control the slope signal compensation module 4031 to generate the slope compensation signal.

During specific implementation, the slope signal compensation module mainly outputs the slope compensation signal by charging and discharging the first capacitor C1. Charging and discharging states of the first capacitor C1 may be implemented by adjusting a working state of a switch in the slope signal compensation module.

In this embodiment of this application, the control module 4032 may control the slope signal compensation module 4031 to perform slope compensation by adjusting working states of a plurality of switches, to obtain the slope compensation signal.

With reference to FIG. 6, the following describes in detail a specific structure of the control module 4032 and a process of controlling the slope signal compensation module 4031 to perform slope compensation.

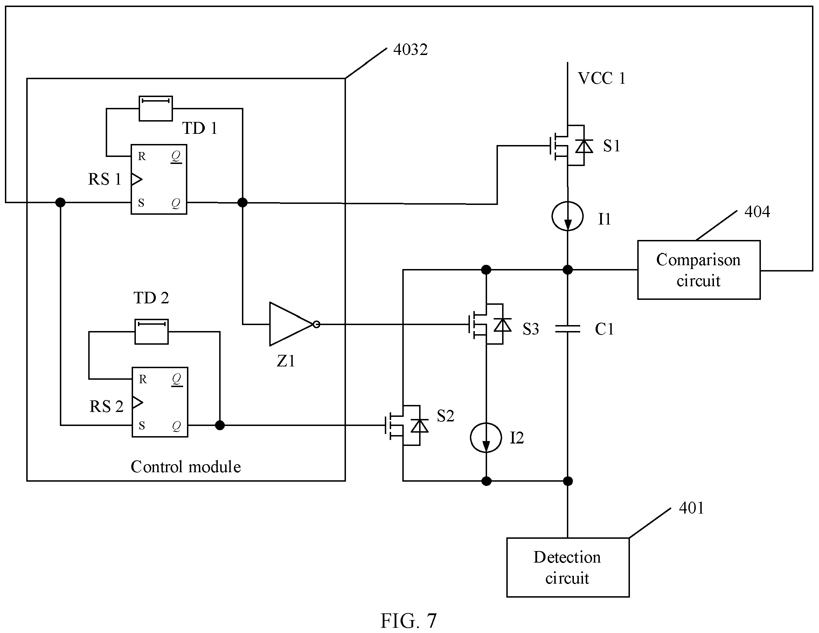

FIG. 7 is a schematic diagram of the structure of the control module 4032 according to an embodiment of this application. As shown in FIG. 7, the control module 4032 includes a first RS flip-flop RS 1, a second RS flip-flop RS 2, a first timer TD 1, a second timer TD 2, and a first phase inverter Z1.

Connection relationships between components in the control module 4032 shown in FIG. 7 may be as follows: A first end of the first RS flip-flop RS 1 is connected to an output end of the comparison circuit 404, a second end of the first RS flip-flop RS 1 is connected to a first end of the first timer TD 1, and an output end of the first RS flip-flop RS 1 is connected to the control electrode of the first switch S1, an input end of the first phase inverter Z1, and a second end of the first timer TD 1; a first end of the second RS flip-flop RS 2 is connected to the comparison circuit, a second end of the second RS flip-flop RS 2 is connected to a first end of the second timer TD 2, and an output end of the second RS flip-flop RS 2 is connected to the control electrode of the second switch S2 and a second end of the second timer TD 2; and an output end of the first phase inverter Z1 is connected to the control electrode of the third switch S3.

When the foregoing control module 4032 is used to control working states of a plurality of switches in the slope signal compensation module 4031, if the comparison circuit 404 outputs a high level signal, both a setting end S of the flip-flop RS 1 and a setting end S of the flip-flop RS 2 receive the high level signal. In this case, output ends of the flip-flop RS 1 and the flip-flop RS 2 output the high level signal, the switch S1 and the switch S2 are turned on because control electrodes of the switch S1 and the switch S2 receive the high level signal, and the first capacitor C1 is discharged through the switch S2. At the same time, the timer TD 1 and the timer TD 2 start timing. Because signals received by two input ends of the comparison circuit 404 always change, duration in which the comparison circuit 404 outputs a high level signal is short, and signals received by the setting end S of the flip-flop RS 1 and the setting end S of the flip-flop RS 2 quickly change from a high level state to a low level state. Because timing time of the timer TD 1 and the timer TD 2 does not arrive, the TD 1 and the TD 2 output low level signals, states of output ends of the flip-flop RS 1 and the flip-flop RS 1 remain unchanged, and the switch S1 and the switch S2 remain in an on state. When the first capacitor C1 is completely discharged, and the timing time of TD 2 arrives, the output end of the flip-flop RS 2 outputs a low level signal, the switch S2 is turned off because the control electrode of the switch S2 receives the low level signal, the switch S1 remains in the on state, and the current source I1 performs constant current charging on the first capacitor C1 through the switch S1. When the capacitor C1 is completely charged, the timing time of the timer TD 1 arrives, the TD 1 outputs a high level signal, a signal output by the output end of the flip-flop RS 1 flips from a high level to a low level, the switch S1 is turned off because the control electrode of the switch S1 receives a low level signal, the output end of the Z1 outputs a high level signal, and the first capacitor C1 performs constant current discharging through the switch S3 and the current source I2.

In actual use, when the output voltage of the first conversion circuit 200 reaches a target value, a sum of a discharging voltage value of the first capacitor C1 and the target value is an amplitude of the error signal, and the comparison circuit 404 may generate a corresponding drive signal at a moment at which the output voltage of the first conversion circuit 200 reaches the target value, so that the output voltage of the first conversion circuit 200 meets a voltage requirement of a load.

In actual use, the slope signal is generated by controlling the first capacitor C1 to perform charging and discharging, and the slope signal generated by the first capacitor C1 is compensated by superimposing the voltage value of the first voltage on the second end of the first capacitor C1, to obtain the slope compensation signal.

In the foregoing slope compensation manner, although charging and discharging processes and charging and discharging time of the first capacitor C1 do not change, because the voltage value of the first voltage is superimposed on the second end of the first capacitor C1, an amplitude of the slope compensation signal output by the first end of the first capacitor C1 changes, and a moment at which a difference between a corresponding slope compensation signal and the error signal is zero is earlier. In this way, a low response caused by a slow output speed of a signal of the amplification circuit can be effectively eliminated, and the output voltage meets a requirement of a load.

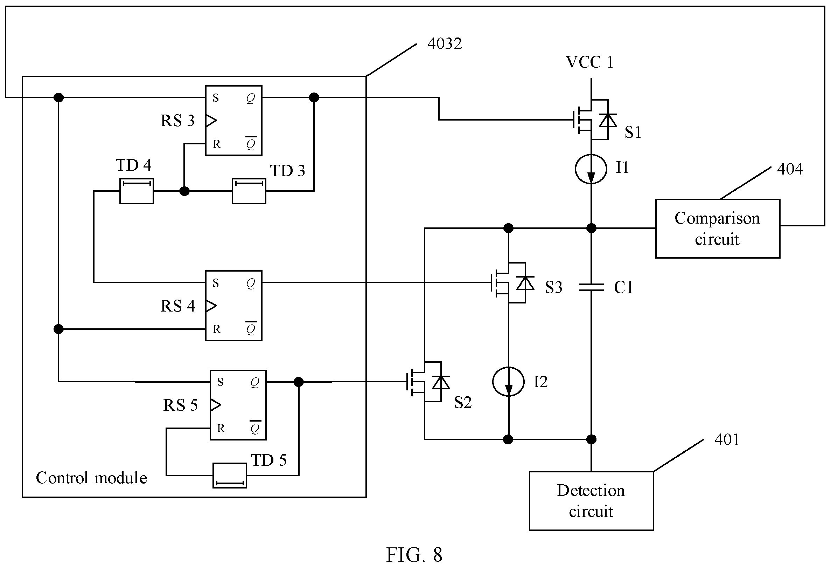

FIG. 8 is a schematic diagram of a structure of another control module 4032 according to an embodiment of this application. As shown in FIG. 8, the control module 4032 includes a third RS flip-flop RS 3, a fourth RS flip-flop RS 4, a fifth RS flip-flop RS 5, a third timer TD 3, a fourth timer TD 4, and a fifth timer TD 5.

Connection relationships between components in the control module 4031 shown in FIG. 8 may be as follows: A first end of the third RS flip-flop RS 3 is connected to an output end of the comparison circuit, a second end of the third RS flip-flop RS 3 is connected to a first end of the third timer TD 3 and a first end of the fourth timer TD 4, and an output end of the third RS flip-flop RS 3 is connected to the control electrode of the first switch S1 and a second end of the third timer TD 3; a first end of the fourth RS flip-flop RS 4 is connected to a second end of the fourth timer TD 4, a second end of the fourth RS flip-flop RS 4 is connected to the comparison circuit, and an output end of the fourth RS flip-flop RS 4 is connected to the control electrode of the third switch S3; and a first end of the fifth RS flip-flop RS 5 is connected to the comparison circuit, a second end of the fifth RS flip-flop RS 5 is connected to a first end of the fifth timer TD 5, and an output end of the fifth RS flip-flop RS 5 is connected to the control electrode of the second switch S2 and a second end of the fifth timer TD 5.

When the foregoing control module 4032 is used to control working states of a plurality of switches in the slope signal compensation module 4031, if the comparison circuit 404 outputs a high level signal, both a setting end S of the flip-flop RS 3 and a setting end S of the flip-flop RS 5 receive the high level signal. In this case, output ends of the flip-flop RS 3 and the flip-flop RS 5 output the high level signal, the switch S1 and the switch S2 are turned on because control electrodes of the switch S1 and the switch S2 receive the high level signal, and the capacitor C1 is discharged through the switch S2. At the same time, the timer TD 3, the timer TD 4, and the timer TD 5 start timing. Because signals received by two input ends of the comparison circuit 404 always change, duration in which the comparison circuit 404 outputs a level signal is short, and signals received by the setting end S of the flip-flop RS 3 and the setting end S of the flip-flop RS 5 quickly change from a high level state to a low level state. Because timing time of the timer TD 3, the timer TD 4, and the timer TD 5 has not arrived, the timer TD 3, the timer TD 4, and the timer TD 5 output low level signals. In this case, the switch S1 and the switch S2 remain in an on state, and the switch S3 is turned off. When the capacitor C1 is completely discharged, and the timing time of the TD 5 arrives, the flip-flop RS 5 outputs a low level signal, the switch S2 is turned off, the switch S1 remains in the on state, and the current source I1 performs constant current charging on the capacitor C1 through the switch S1. When the capacitor C1 is completely charged, timing time of the timer TD 3 and the timer TD 4 arrives, the TD 3 outputs a high level signal, a signal output by the output end of the flip-flop RS 3 flips from a high level to a low level, the switch S1 is turned off because the control electrode of the switch S1 receives a low level signal, the RS 4 outputs a high level signal, a control end of the switch S3 is turned on because the control end of the switch S3 receives a high level signal, and the capacitor C1 performs constant current discharging through the switch S3 and the current source I2.

In a possible implementation, timing duration of the TD 4 is greater than timing duration of the TD 3. When the timing duration of the TD 3 arrives, the TD 3 outputs a high level signal, a signal output by the output end of the flip-flop RS 3 flips from a high level state to a low level state, and the switch S1 is turned off because the control electrode of the switch S1 receives a signal. In this case, the first capacitor C1 maintains a current state. When the timing time of the TD 4 arrives, the RS 4 outputs a high level signal, the control end of the switch S3 is turned on because the control end of the switch S3 receives the high level signal, and the capacitor C1 performs constant current discharging through the switch S3 and the current source I2.

It should be noted that although charging and discharging processes and charging and discharging time of the first capacitor C1 do not change, because the voltage value of the first voltage is superimposed on the second end of the first capacitor C1, an amplitude of the slope compensation signal output by the first end of the first capacitor C1 changes, and an offset occurs on a moment at which a difference between a corresponding slope compensation signal and the error signal is zero, to quickly respond to a change of the output voltage.

It should be noted that the foregoing description of the structure of the control module is merely an example. In actual use, the control module provided in this application may further include another structure. For example, a delayer may be used to replace a timer in the control module. This is not enumerated in this application.

### Embodiment 2

The slope signal compensation module 4031 includes a fourth switch S4, a fifth switch S5, a sixth switch S6, a second capacitor C2, a third current source I3, a fourth current source I4, and an adder Σ.

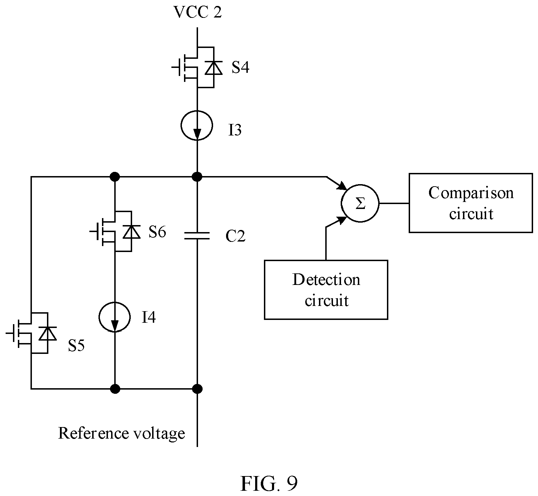

Specifically, as shown in FIG. 9, a second electrode of the fifth switch S5 is connected to a second electrode of the sixth switch S6; the second electrode of the sixth switch S6 is connected to a first end of the fourth current source I4; a second end of the fourth current source I4 is connected to a second end of the second capacitor C2; the second end of the second capacitor C2 is configured to receive the reference voltage, and a first end of the second capacitor C2 is connected to a first input end of the adder Σ; a second end of the adder Σ is connected to the detection circuit, and an output end of the adder Σ is connected to the comparison circuit; and a control electrode of the fourth switch S4, a control electrode of the fifth switch S5, and a control electrode of the sixth switch S6 are all connected to a first control module.

By using the foregoing slope signal compensation module 4031, an amplitude of the slope compensation signal may be adjusted by controlling charging and discharging time of the second capacitor C2. Because the first input end of the adder Σ is connected to the first end of the second capacitor C2, the first input end of the adder Σ can receive a slope signal output by the second capacitor C2. The second input end of the adder Σ is connected to the detection circuit 401, and receives a second voltage output by the detection circuit 401. The adder Σ superposes a second signal and the slope signal, and outputs the slope compensation signal.

Specifically, the control electrode of the fourth switch S4, the control electrode of the fifth switch S5, and the control electrode of the sixth switch S6 are all connected to the control module 4032, and the control module 4032 controls working states of the three switches, to control the slope signal compensation module 4031 to generate the slope compensation signal.

The following describes in detail a specific structure of the control module 4032 with reference to FIG. 9.

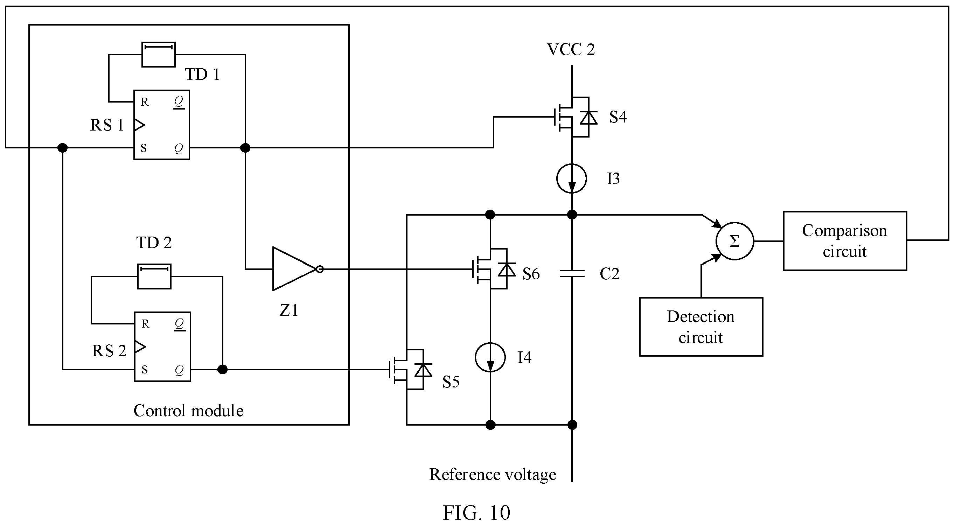

FIG. 10 is a schematic diagram of the structure of the control module 4032 according to an embodiment of this application. As shown in FIG. 10, the control module includes a first RS flip-flop RS 1, a second RS flip-flop RS 2, a first timer TD 1, a second timer TD 2, and a first phase inverter Z1.

Connection relationships between components in the control module shown in FIG. 10 may be as follows: A first end of the first RS flip-flop RS 1 is connected to an output end of the comparison circuit, a second end of the first RS flip-flop RS 1 is connected to a first end of the first timer TD 1, and an output end of the first RS flip-flop RS 1 is connected to the control electrode of the fourth switch S4, an input end of the first phase inverter Z1, and a second end of the first timer TD 1; a first end of the second RS flip-flop RS 2 is connected to the comparison circuit, a second end of the second RS flip-flop RS 2 is connected to a first end of the second timer TD 2, and an output end of the second RS flip-flop RS 2 is connected to the control electrode of the first switch S1 and a second end of the second timer TD 2; and an output end of the first phase inverter Z1 is connected to the control electrode of the second switch S2.

It should be understood that a process in which the control module 4031 shown in FIG. 10 controls charging and discharging of the second capacitor C2 is the same as a process in which the foregoing control module 4032 controls charging and discharging of the first capacitor C1. Details are not described herein again in this application.

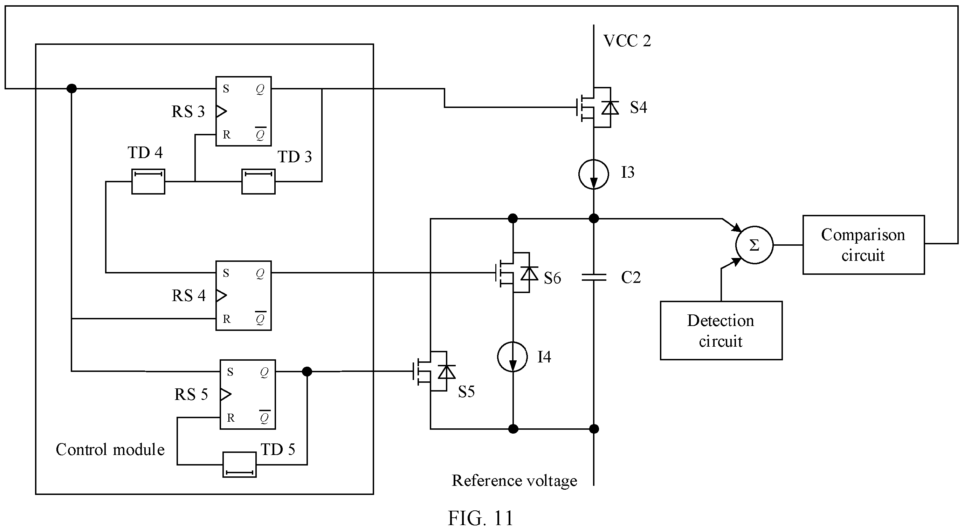

FIG. 11 is a schematic diagram of a structure of another control module according to an embodiment of this application. As shown in FIG. 11, the control circuit includes a third RS flip-flop RS 3, a fourth RS flip-flop RS 4, a fifth RS flip-flop RS 5, a third timer TD 3, a fourth timer TD 4, and a fifth timer TD 5.

Connection relationships between components in the control module shown in FIG. 11 may be as follows: A first end of the third RS flip-flop RS 3 is connected to an output end of the comparison circuit, a second end of the third RS flip-flop RS 3 is connected to a first end of the third timer TD 3 and a first end of the fourth timer TD 4, and an output end of the third RS flip-flop RS 3 is connected to the control electrode of the fourth switch S4 and a second end of the third timer TD 3; a first end of the fourth RS flip-flop RS 4 is connected to a second end of the fourth timer TD 4, a second end of the fourth RS flip-flop RS 4 is connected to the comparison circuit, and an output end of the fourth RS flip-flop RS 4 is connected to the control electrode of the second switch S2; and a first end of the fifth RS flip-flop RS 5 is connected to the comparison circuit, a second end of the fifth RS flip-flop RS 5 is connected to a first end of the fifth timer TD 5, and an output end of the fifth RS flip-flop RS 5 is connected to the control electrode of the first switch S1 and a second end of the fifth timer TD 5.

It should be understood that a process in which the control module 4031 shown in FIG. 11 controls charging and discharging of the second capacitor C2 is the same as a process in which the foregoing control module 4032 controls charging and discharging of the first capacitor C1. Details are not described herein again in this application.

It should be understood that, in the slope compensation circuit shown in FIG. 9, slope compensation is mainly performed by superimposing, by the adder Σ, the second voltage output by the detection circuit 401. The following describes the slope compensation circuit in detail with reference to the adder Σ.

During specific implementation, the adder Σ may specifically include a first resistor R1, a second resistor R2, a fifth current source I5, a seventh switch S7, an eighth switch S8, a ninth switch S9, a tenth switch S10, an eleventh switch S11, a twelfth switch S12, and a thirteenth switch S13.

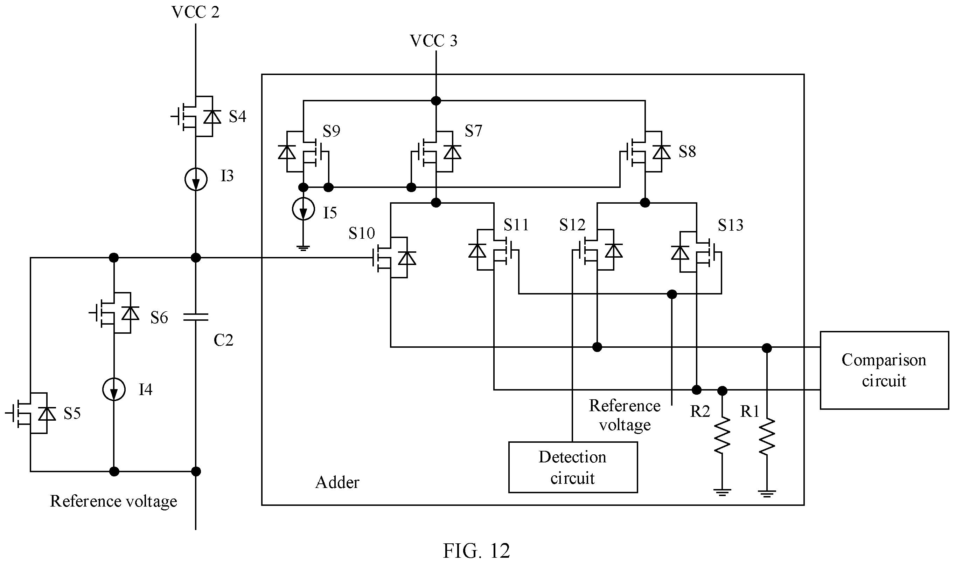

Specifically, as shown in FIG. 12, a first electrode of the seventh switch S7 is connected to a third power supply VCC 3, a second electrode of the eleventh switch S11 is connected to a first electrode of the tenth switch S10 and a first electrode of the eleventh switch S11, and a control electrode of the seventh switch S7 is connected to a control electrode of the eighth switch S8 and a control electrode of the ninth switch S9; a first electrode of the eighth switch S8 is connected to the third power supply VCC 3, and a second electrode of the twelfth switch S12 is connected to a first electrode of the twelfth switch S12 and a first electrode of the thirteenth switch S13; a first electrode of the ninth switch S9 is connected to the third power supply VCC 3, and a second electrode of the thirteenth switch S13 is connected to a first end of the fifth current source I5; a second end of the fifth current source I5 is connected to a ground cable; a second electrode of the tenth switch S10 is connected to the comparison circuit and a first end of the first resistor R1, and a control electrode of the tenth switch S10 is connected to the first end of the second capacitor C2; a second electrode of the eleventh switch S11 is connected to the comparison circuit and a first end of the second resistor R2, and a control electrode of the eleventh switch S11 is configured to receive the reference voltage; a second electrode of the twelfth switch S12 is connected to the comparison circuit and the first end of the first resistor R1, and a control electrode of the twelfth switch S12 is connected to the detection circuit; a second electrode of the thirteenth switch S13 is connected to the comparison circuit and the first end of the second resistor R2, and a control electrode of the thirteenth switch S13 is configured to receive the reference voltage; a second end of the first resistor R1 is connected to the ground cable; and a second end of the second resistor R2 is connected to the ground cable. The control electrode of the seventh switch S7 is connected to the control electrode of the eighth switch S8, the control electrode of the ninth switch S9, and the second electrode of the ninth switch S9.

Specifically, the reference voltage is superimposed on the second end of the second capacitor C2 in the slope signal compensation module, and the switch S 15 receives the reference voltage, to eliminate impact, on time at which the comparison signal outputs the comparison circuit, of the superimposed reference voltage that is in the slope compensation signal and that is output by the second capacitor C2, and the voltage value of the first voltage output by the detection circuit 401 is superimposed by using the switch S16.

### 4. The comparison circuit 404

The comparison circuit 404 is separately connected to the amplification circuit 402, the slope compensation circuit 403, and the signal generation circuit 405. The comparison circuit 404 may compare the error signal output by the amplification circuit 402 with the slope compensation signal output by the slope compensation circuit 403, use a comparison result as the comparison signal, and output the comparison signal to the signal generation circuit 405.

In actual use, based on different compensation manners of the slope signal compensation module 4031 in the slope compensation circuit 403, there are two circuit structures in the comparison circuit in this embodiment of this application.

In a possible implementation, if the slope signal compensation module 4031 performs slope signal compensation by using the slope signal compensation module shown in FIG. 6, the comparison circuit 404 may directly use a comparator.

Specifically, an inverting input end of the comparator may be connected to the first end of the first capacitor C1, and receives the slope compensation signal output by the first capacitor C1; a non-inverting input end of the comparator may be connected to the output end of the amplification circuit 302, and receives the error signal output by the amplification circuit 302; and an output end of the comparator is connected to the signal generation circuit 405. The comparator compares the slope compensation signal received at the input end with the error signal, and outputs a comparison result to the signal generation circuit 405.

In a possible implementation, if the slope signal compensation module 4031 performs slope compensation by using the slope signal compensation module shown in FIG. 10, the comparison circuit 404 may include a fourteenth switch S14, a fifteenth switch S15, a sixteenth switch S16, and a first comparator COMP 1.

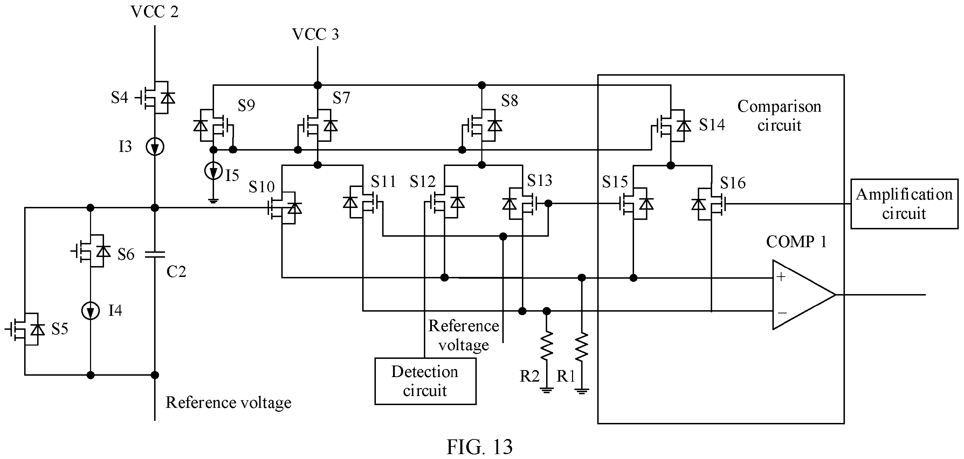

Specifically, as shown in FIG. 13, a first electrode of the fourteenth switch S14 is connected to the third power supply VCC 3, a second electrode of the fourteenth switch S14 is separately connected to a first electrode of the fifteenth switch S15 and a first electrode of the sixteenth switch S16, and a control electrode of the fourteenth switch S14 is connected to the control electrode of the seventh switch S7.

A second electrode of the fifteenth switch S15 is connected to a first input end of the first comparator COPM 1, and a control electrode of the fifteenth switch S15 is configured to receive the reference signal. A second electrode of the sixteenth switch S16 is connected to a second input end of the first comparator COMP 1, and a control electrode of the sixteenth switch S16 is connected to the amplification circuit. The first input end of the first comparator COMP 1 is connected to the second electrode of the tenth switch S10 and the second electrode of the twelfth switch S 12. The second input end of the first comparator COMP 1 is connected to the second electrode of the eleventh switch S11 and the second electrode of the thirteenth switch S 13, and an output end of the first comparator COMP 1 is connected to the signal generation circuit.

It should be noted that in the adder shown in FIG. 12, a difference between the first voltage and the reference voltage is superimposed in the switch S16 and the switch S17, so that a control electrode of the switch S19 may receive the reference voltage to perform voltage compensation, to meet a requirement of ensuring that a signal flipping moment of the comparator COMP 1 meets an output voltage.

### 5. The signal generation circuit 405

The signal generation circuit 405 is connected to the comparison circuit 404, and the signal generation circuit 405 is further connected to a switch of the first conversion circuit 200. The signal generation circuit 405 may generate the drive signal of the first conversion circuit 200 based on the comparison signal output by the comparison circuit 404.

The signal generation circuit 405 may include a frequency division module 4051, a first signal generation module 4052, and a second signal generation module 4053.

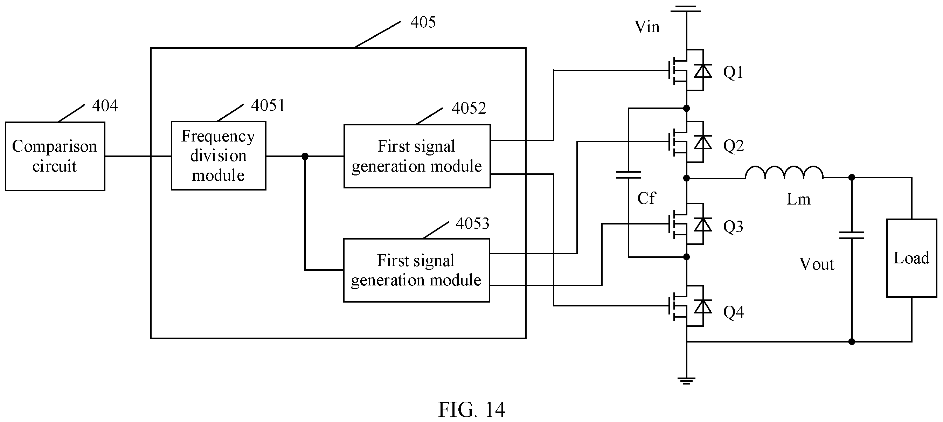

Specifically, as shown in FIG. 14, an input end of the frequency division module 4051 is connected to the comparison circuit 404, an output end of the frequency division module 4051 is connected to the first signal generation module 4052 and the second signal generation module 4053, and the frequency division module 4051 is configured to: perform frequency division processing on the comparison signal output by the comparison circuit 404, to obtain a first frequency division signal and a second frequency division signal, output the first frequency division signal to the first signal generation module 4052, and output the second frequency division module to the second signal generation module 4053. The first signal generation module 4052 may generate a first drive signal based on the first frequency division signal and a voltage conversion ratio of the first conversion circuit 200. The second signal generation module 4053 may generate a second drive signal based on the second frequency division signal and the voltage conversion ratio of the first conversion circuit 200.

In a possible implementation, if the first conversion circuit 200 is a two-level conversion circuit, the first conversion circuit 200 includes a first group of switches and a second group of switches. When the first group of switches is turned on, an input power supply may charge the output inductor in the first conversion circuit. When the first group of switches is turned off, and the second group of switches is turned on, the output inductor performs freewheeling through the second group of switches. In this case, the drive signal of the first conversion circuit 200 includes the first drive signal and the second drive signal.

Specifically, the first signal generation module 4052 may be connected to the first group of switches, and output the first drive signal to the first group of switches. The second signal generation module 4053 may be connected to the second group of switches, and output the second drive signal to the second group of switches.

In a possible implementation, if the first conversion circuit 200 is a three-level conversion circuit, the first conversion circuit 200 includes a first group of switches, a second group of switches, a third group of switches, and a fourth group of switches. For a structure of the first conversion circuit 200, refer to FIG. 1. The drive signal of the first conversion circuit 200 includes a first drive signal, a second drive signal, a third drive signal, and a fourth drive signal.

Specifically, the first signal generation module 4052 may be connected to the first group of switches and the third group of switches. The first signal generation module 4052 may generate the first drive signal and the third drive signal, output the first drive signal to the first group of switches, and output the third drive signal to the second group of switches. The second signal generation module 4053 may be connected to the second group of switches and the fourth group of switches. The second signal generation module 4053 may generate the second drive signal and the fourth drive signal, output the second drive signal to the second group of switches, and output the fourth drive signal to the fourth group of switches.

Specific structures of the frequency division module 4051, the first signal generation module 4052, and the second signal generation module 4053 are described below.

Specifically, the first signal generation module 4052 includes a first on-time control module and a first logic module. The second signal generation module 4053 includes a second on-time control module and a second logic module.

The first on-time control module is connected to the input end of the first conversion circuit 200, the output end of the first conversion circuit 200, and the frequency division module, and the first on-time control module is configured to: after receiving the first frequency division signal, generate a first on-time control signal based on a comparison result between an input voltage of the first conversion circuit 200 and the output voltage of the first conversion circuit 200. The first logic module is separately connected to the first on-time control module and the frequency division module, and generates the first drive signal based on the first on-time control signal and the first frequency division signal. The second on-time control module is connected to the input end of the first conversion circuit 200, the output end of the first conversion circuit 200, and the frequency division module, and the second on-time control module is configured to: after receiving the second frequency division signal, generate a second on-time control signal based on the comparison result between the input voltage of the first conversion circuit 200 and the output voltage of the first conversion circuit 200. The second logic module is separately connected to the second on-time control module and the frequency division module, and generates the second drive signal based on the second on-time control signal and the second frequency division signal.

In a possible implementation, the first logic module may be further configured to generate the third drive signal, and the second logic module may be further configured to generate the fourth drive signal.

A function of the first on-time control module is set to determine on-time duration of the first drive signal. A function of the first logic module is set to: determine a period of the first drive signal based on the first frequency division signal, and generate the first drive signal based on the on-time duration of the first drive signal. A function of the second on-time control module is set to determine on-time duration of the second drive signal. A function of the second logic module is set to: determine a period of the second drive signal based on the second frequency division signal, and generate the second drive signal based on the on-time duration of the second drive signal.

For ease of understanding, specific examples of the frequency division module 4051, the first signal generation module 4052, and the second signal generation module 4053 are provided below.

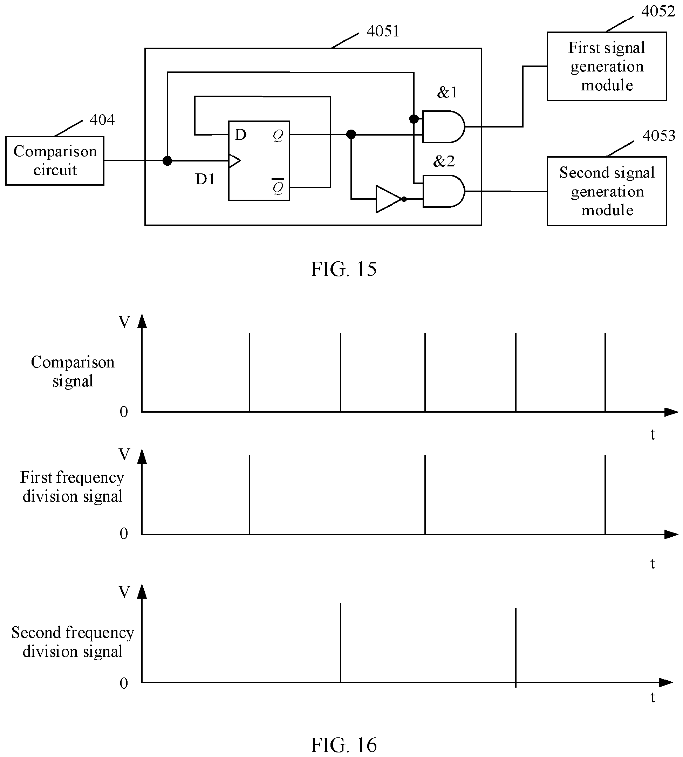

FIG. 15 is a schematic diagram of a structure of the frequency division module 4051 according to an embodiment of this application. In FIG. 15, the frequency division module 4051 may include a D flip-flop, a phase inverter D1, a first AND gate circuit D2, and a second AND gate circuit D3. A clock input end of the D flip-flop is used as an input end of the frequency division module and is connected to the input end of the comparison circuit, an output end of the first AND gate circuit D2 is used as a first output end of the frequency division module and is connected to the first signal generation module, and an output end of the second AND gate circuit D3 is used as a second output end of the frequency division module and is connected to the second signal generation module.

Connection relationships between components in the frequency division module shown in FIG. 15 is as follows: A clock end of the D flip-flop is connected to the comparison circuit 404, a D input end of the D flip-flop is connected to a second input end of the D flip-flop and a second input end of the second AND gate circuit D3, a data output end of the D flip-flop is connected to a second input end of the first AND gate circuit D2, a first input end of the first AND gate circuit D2 is connected to the output end of the comparison circuit, and a first input end of the second AND gate circuit D3 is connected to the output end of the comparison circuit.

When the frequency division module 4051 shown in FIG. 15 is used to perform frequency division processing on the comparison circuit output by the comparison circuit 404, the D flip-flop acts on a rising edge of the comparison signal. When the comparison signal output by the comparison circuit 404 is in a high level state, a signal output by the D flip-flop flips once, an initial state of the D flip-flop is in a low level signal, an output signal of the D flip-flop flips from a low level signal to a high level signal, the AND gate circuit &1 meets a condition of outputting a high level, the first frequency division signal output by the &1 flips from a low level state to a high level signal, and the second frequency division signal remains in a low level state because the &2 receives a low level signal. When the comparison circuit presents a high level state next time, a signal output by the D flip-flop flips from a high level state to a low level signal. In this case, an input end of the &1 receives a low level signal, two input ends of the &2 receive high level signals, the first frequency division signal output by the &1 flips from a high level state to a low level state, and the second frequency division signal output by the &2 flips from a low level state to a high level state. For schematic diagrams of waveforms of the first frequency division signal, the second frequency division signal, and the comparison signal, refer to FIG. 16.

It should be understood that periods of the first frequency division signal and the second frequency division signal are the same, and are mutually offset by half a period.

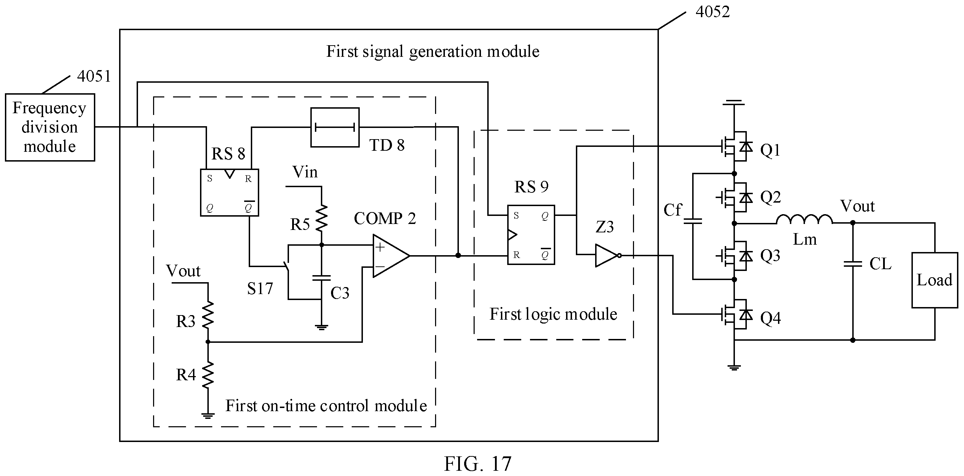

FIG. 17 is a schematic diagram of a structure of the first signal generation module according to an embodiment of this application. As shown in FIG. 17, a third resistor R3, a fourth resistor R4, a fifth resistor R5, a seventeenth switch S17, a third capacitor C3, a second comparator COMP 2, an eighth RS flip-flop RS 8, and an eighth timer TD 8 form the first on-time control module, and a ninth RS flip-flop RS 9 forms the first logic module.

Connection relationships between components in the first signal generation module 4052 shown in FIG. 17 is as follows: A first end of the third resistor R3 is connected to the output end of the first conversion circuit 200, and a second end of the third resistor R3 is connected to a first end of the fourth resistor R4; the first end of the fourth resistor R4 is connected to a first input end of the second comparator COMP 2, and a second end of the fourth resistor R4 is connected to the ground cable; a first end of the fifth resistor R5 is connected to the input end of the first conversion circuit 200, and a second end of the fifth resistor R5 is connected to a first electrode of the seventeenth switch S17 and a first end of the third capacitor C3; the first end of the third capacitor C3 is connected to a second input end of the second comparator COMP 2, and a second end of the third capacitor C3 is connected to the ground cable; a second electrode of the seventeenth switch S17 is connected to the ground cable, and a control circuit of the seventeenth switch S17 is connected to an output end of the eighth RS flip-flop RS 8; an output end of the second comparator COMP 2 is connected to the first logic module and a first end of the eighth timer TD 8; a first input end of the eighth RS flip-flop RS 8 is connected to the output end of the frequency division module, and a second input end of the eighth RS flip-flop RS 8 is connected to a second end of the eighth timer TD 8; and a first input end of the ninth RS flip-flop RS 9 is connected to the output end of the frequency division module, a second input end of the ninth RS flip-flop RS 9 is connected to the first on-time control module, and an output end of the ninth RS flip-flop RS 9 is configured to connect to the switch S1.

In actual use, if the first conversion circuit 200 is a three-level conversion circuit, the first logic module further includes a third phase inverter Z3. An input end of the third phase inverter Z3 is connected to the output end of the ninth RS flip-flop RS 9, and an output end of the third phase inverter Z3 is connected to the switch S4.

When the first drive signal and the fourth drive signal are generated by the first signal generation module shown in FIG. 17, and when the first frequency division signal is in a high level state, the flip-flop RS 8 provides a low level signal to the control electrode of the seventeenth switch S17 because a setting end S of the flip-flop RS 8 receives a high level signal, the seventeenth switch S17 is turned off, and the input voltage Vin of the first conversion circuit 200 charges the capacitor C3. When a potential of a second end of the capacitor C3 is higher than a potential of a second end of the resistor R3, an output signal of the comparator COMP 2 flips from a low level state to a high level state. If the first frequency division signal output by the frequency division module is in a high level state, the flip-flop RS 9 outputs a high level to the switch S1, and the phase inverter Z3 inverts the high level output by the RS 4 to obtain a low level signal and sends the low level signal to the switch S4. The flip-flop RS 9 outputs the first drive signal, and the phase inverter Z3 outputs the fourth drive signal.

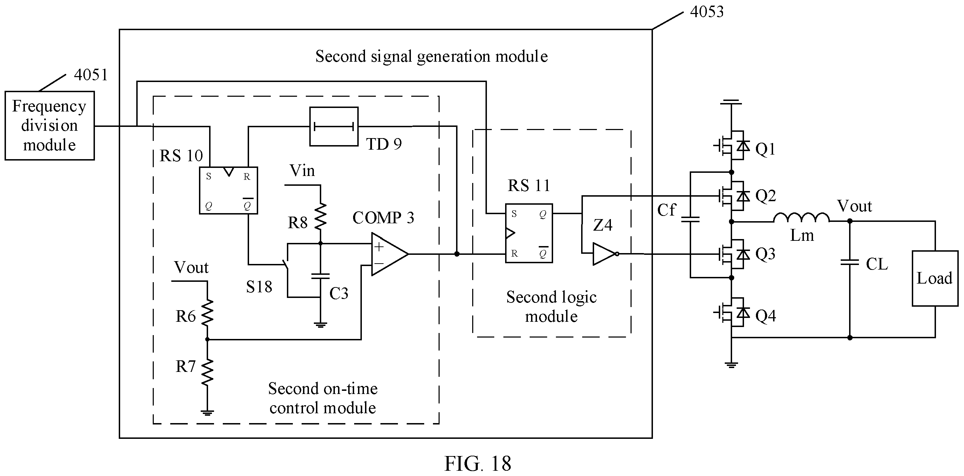

Similarly, FIG. 18 is a schematic diagram of a structure of the second signal generation module 4053. As shown in FIG. 18, a sixth resistor R6, a seventh resistor R7, an eighth resistor R8, a twenty-first switch S22, a fourth capacitor C4, a third comparator COMP 3, a tenth RS flip-flop RS 10, and a ninth timer TD 9 form the first on-time control module, and an eleventh RS flip-flop RS 11 forms the second logic module.

Connection relationships between components in the first signal generation module 4052 shown in FIG. 18 is as follows: A first end of the sixth resistor R6 is connected to the output end of the first conversion circuit 200, and a second end of the sixth resistor R6 is connected to a first end of the seventh resistor R7; the first end of the seventh resistor R7 is connected to a first input end of the third comparator COMP 3, and a second end of the seventh resistor R7 is connected to the ground cable; a first end of the eighth resistor R8 is connected to the input end of the first conversion circuit 200, and a second end of the eighth resistor R8 is connected to a first electrode of the eighteenth switch S18 and a first end of the fourth capacitor C4; the first end of the fourth capacitor C4 is connected to a second input end of the third comparator COMP 3, and a second end of the fourth capacitor C4 is connected to the ground cable; a second electrode of the eighteenth switch S18 is connected to the ground cable, and a control circuit of the eighteenth switch S18 is connected to an output end of the tenth RS flip-flop RS 10; an output end of the third comparator COMP 3 is connected to the second logic module and a first end of the ninth timer TD 9; a first input end of the tenth RS flip-flop RS 10 is connected to the output end of the frequency division module, and a second input end of the tenth RS flip-flop RS 10 is connected to a second end of the ninth timer TD 9; and a first input end of the eleventh RS flip-flop RS 11 is connected to the output end of the frequency division module, a second input end of the eleventh RS flip-flop RS 11 is connected to the second on-time control module, and an output end of the eleventh RS flip-flop RS 11 is configured to connect to the switch S2.

In actual use, if the first conversion circuit 200 is a three-level conversion circuit, the second logic module further includes a fourth phase inverter Z4. An input end of the fourth phase inverter Z4 is connected to the output end of the eleventh RS flip-flop RS 11, and an output end of the fourth phase inverter Z4 is connected to the switch S3.

It should be noted that a working principle of the second signal generation module 4053 is the same as a working principle of the first signal generation module 4052. Because the first frequency division signal and the second frequency division signal are offset by half a period, the first drive signal and the second drive signal are also offset by half a period.

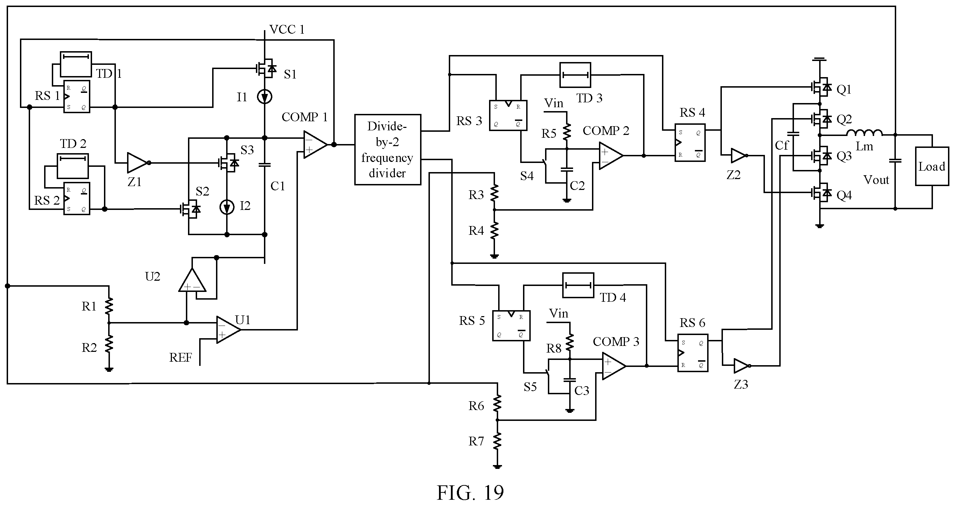

With reference to the foregoing description, for example, a power converter provided in this embodiment of this application may be shown in FIG. 19.

The first conversion circuit includes a switch Q1/Q2/Q3/Q4, an output inductor Lm, and a flying capacitor Cf.

The voltage divider circuit includes a resistor R1 and a resistor R2. A first end of the resistor R1 is connected to the output end of the first conversion circuit 200, a second end of the resistor R1 is connected to a first end of the resistor R2, a second end of the resistor R2 is grounded, and a second end of the resistor R1 outputs the first voltage. The second end of the resistor R1 forms a to-be-detected point connected to the detection circuit.

The detection circuit includes a data transmission line, where the output transmission line is connected to the to-be-detected point, and outputs the voltage value of the first voltage output by the to-be-detected point to the amplification circuit and the slope compensation circuit.

The amplification circuit includes an operational amplifier U1. A first input end of the U1 is connected to the second end of the resistor R1, a second input end of the U1 receives the reference voltage, and an output end of the U1 outputs the error signal.

The slope compensation circuit includes a switch S1, a switch S2, a switch S3, a capacitor C1, a follower U2, an RS flip-flop RS 1, an RS flip-flop RS 2, a timer TD 1, a timer TD 2, a current source I1, a current source I2, and a phase inverter Z1. A first electrode of the switch S1 is connected to a power supply VCC 1, and a second electrode of the switch S1 is connected to a first end of the current source I1. A second end of the current source I1 is separately connected to a first end of the capacitor C1, a first electrode of the switch S3, and a first electrode of the switch S3. A second electrode of the switch S2 is connected to a second end of the C1. A second electrode of the switch S3 is connected to a first end of the current source I2. A second end of the current source I2 is connected to the second end of the capacitor C1. The second end of the capacitor C1 is connected to an output end of the follower U2. An input end of the follower U2 is connected to a second end of the resistor R1. The second end of the capacitor C1 outputs the slope compensation signal. A first end of the RS flip-flop RS 1 receives the comparison signal, a second end of the RS flip-flop RS 1 is connected to a first end of the timer TD 1, and an output end of the RS flip-flop RS 1 is connected to a control electrode of the switch S 1, an input end of the phase inverter Z1, and a second end of the timer TD 1. A first end of the RS flip-flop RS 2 receives the comparison signal, a second end of the RS flip-flop RS 2 is connected to a first end of the timer TD 2, and an output end of the RS flip-flop RS 2 is connected to a control electrode of the switch S2 and a second end of the timer TD 2. An output end of the phase inverter Z1 is connected to a control electrode of the switch S3.

The comparison circuit includes a comparator COMP 1. A first input end of the comparator COMP 1 is connected to the output end of the U1, a second input end of the comparator COMP 1 is connected to the first end of the capacitor C1, and an output end of the comparator COMP 1 outputs the comparison signal.

The signal generation circuit includes a divide-by-2 frequency divider, a resistor R3, a resistor R4, a resistor R5, a resistor R6, a resistor R7, a resistor R8, a switch S4, a switch S5, a capacitor C2, a capacitor C3, a comparator COMP 2, a comparator COMP 3, an RS flip-flop RS 3, an RS flip-flop RS 4, an RS flip-flop RS 5, an RS flip-flop RS 6, a timer TD 3, a timer TD 4, a phase inverter Z2, and a phase inverter Z3. A first end of the resistor R3 is connected to the output end of the first conversion circuit, and a second end of the resistor R3 is connected to a first end of the resistor R4. The first end of the resistor R4 is connected to a first input end of the comparator COMP 2, and a second end of the resistor R4 is connected to a ground cable. A first end of the resistor R5 is connected to the input end of the first conversion circuit, and a second end of the fifth resistor R5 is connected to a first electrode of the switch S4 and a first end of the capacitor C2. The first end of the capacitor C2 is connected to a second input end of the second comparator COMP 2, and a second end of the capacitor C2 is connected to the ground cable. A second electrode of the switch S4 is connected to the ground cable, and a control electrode of the switch S4 is connected to an output end of the flip-flop RS 3. An output end of the second comparator COMP 2 is connected to an R end of the RS flip-flop RS 4 and an input end of the timer TD 3. An S end of the flip-flop RS 3 is connected to a first input end of the divide-by-2 frequency divider, and an R end of the flip-flop RS 3 is connected to an output end of the timer TD 3. An S end of the flip-flop RS 4 is connected to a first output end of the divide-by-2 frequency divider, and an output end of the flip-flop RS 4 is connected to a control electrode of the switch Q1 and an input end of the phase inverter Z2. An output end of the phase inverter Z2 is connected to an output end of the switch Q4. A first end of the resistor R6 is connected to the output end of the first conversion circuit, and a second end of the resistor R6 is connected to a first end of the resistor R7. The first end of the resistor R7 is connected to a first input end of the comparator COMP 3, and a second end of the resistor R4 is connected to the ground cable. A first end of the resistor R8 is connected to the input end of the first conversion circuit, and a second end of the fifth resistor R8 is connected to a first electrode of the switch S5 and a first end of the capacitor C3. The first end of the capacitor C3 is connected to a second input end of the comparator COMP 3, and a second end of the capacitor C3 is connected to the ground cable. A second electrode of the switch S5 is connected to the ground cable, and a control electrode of the switch S5 is connected to an output end of the flip-flop RS 5. An output end of the comparator COMP 5 is connected to an R end of the RS flip-flop RS 6 and an input end of the timer TD 4. An S end of the flip-flop RS 5 is connected to a second input end of the divide-by-2 frequency divider, and an R end of the flip-flop RS 5 is connected to an output end of the timer TD 4. An S end of the flip-flop RS 6 is connected to a second output end of the divide-by-2 frequency divider, and an output end of the flip-flop RS 6 is connected to a control electrode of the switch Q2 and an input end of the phase inverter Z3. An output end of the phase inverter Z3 is connected to an output end of the switch Q3.

By using the foregoing power converter, when the output voltage of the first conversion circuit changes, resistors R1 and R2 in the detection circuit perform voltage step-down processing on the output voltage to obtain the first voltage, and output the voltage value of the first voltage separately to the slope compensation circuit and the amplification circuit, the capacitor C1 outputs a slope signal based on a fixed period, and the voltage value of the first voltage is superimposed on the second end of the capacitor C1, that is, an amplitude of the slope compensation signal output by the first end of the capacitor C1 is a sum of a charging value of the capacitor C1 and the voltage value of the first voltage. When the output voltage reaches the target value, the sum of the voltage value of the first voltage and the charging value of the capacitor C1 is an amplitude of the error signal of the U1, and time when the comparison signal output by the COMP 1 is at a high level is earlier. The output end of the COMP 1 is connected to the divide-by-2 frequency divider, the divide-by-2 frequency divider is separately connected to setting ends S of flip-flops RS 4 and RS 6, and when the S ends are 1, a drive signal is output once, to change the drive signal of a switch and adjust a working state of the first conversion circuit. Therefore, a drive delay problem caused by a slow output speed of a signal of the U1 can be effectively avoided, and the output voltage meets a requirement of a load.

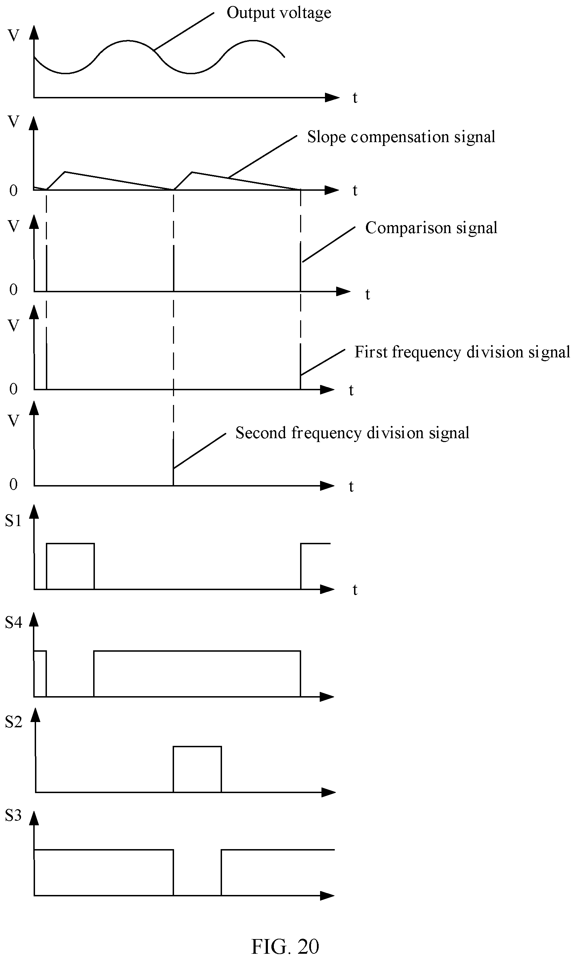

Specifically, as shown in FIG. 20, an inverting input end of the COMP 1 receives a sum of a discharging voltage value of the capacitor C1 and the voltage value of the first voltage, and a non-inverting input end of the COMP 1 receives a voltage output by the U1. When the output voltage of the first conversion circuit reaches the target value, a potential received by the non-inverting input end of the COMP 1 is equal to that received by the inverting input end, the comparison signal flips from a low level to a high level, the comparison signal is divided by the divide-by-2 frequency divider, and a first frequency division signal and a second frequency division signal are output. After the first frequency division signal and the second frequency division signal pass through flip-flops RS 4 and RS 6, a high level drive signal is output to switches Q1 and Q4, the switches Q1 and Q4 are turned on, an input power supply charges the output inductor of the first conversion circuit, and a value of an output current increases. After the output voltage reaches an allowed minimum value, the output voltage increases. Because a waveform of the drive signal is fixed, the output voltage can be waveformed within a specific range according to a fixed rule, to ensure a stable output voltage and meet a requirement of a load.

It should be understood that the foregoing control apparatus may control the slope compensation signal to compensate for an output waveform of the output inductor Lm, to adjust a period of the drive signal. In addition, because the COMP 2 and the COMP 3 in the signal generation circuit are respectively connected to R ends of flip-flops RS 4 and RS 6, time for maintaining a high level of the drive signal may be adjusted by adjusting the COMP 2 and the COMP 3, to adjust a duty cycle of the drive signal.

It should be noted that the foregoing description of a structure of the power converter is merely an example. In actual use, because the first conversion circuit may have different structures, and the slope compensation circuit may be different, the power converter provided in this application may further include another structure. Because a working principle of the another structure is the same, this is not enumerated in this application.

In actual use, to increase conversion power of the power converter, the power converter includes at least one second converter circuit. An output end of the first conversion circuit is connected in parallel to an output end of each second conversion circuit. In this case, output voltages of a plurality of converter circuits are the same. To reduce control costs of the plurality of conversion circuits, the signal generation circuit in the control apparatus provided in embodiments of this application further includes a third signal generation module and a fourth signal generation module that correspond to each second conversion circuit.

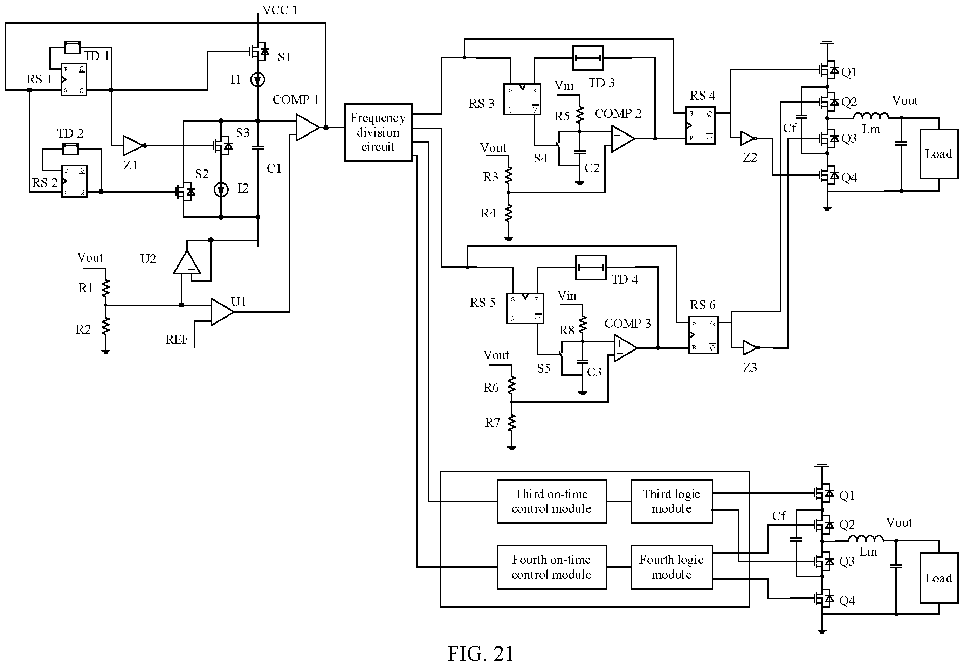

As shown in FIG. 21, the frequency division module is connected to each third signal generation module and each fourth signal generation module, and the frequency division module is further configured to: perform frequency division processing on the comparison signal, and obtain a third frequency division signal that one-to-one corresponds to each third signal generation module and a fourth frequency division signal that one-to-one corresponds to each fourth signal generation module. Each third signal generation module is connected to the frequency division module, and the third signal generation module is configured to: receive a corresponding third frequency division signal, and generate a fifth drive signal based on the received third frequency division signal and a voltage conversion ratio of a corresponding second conversion circuit. The fourth signal generation module is connected to the frequency division module, and the fourth signal generation module is configured to: receive a corresponding fourth frequency division signal, generate a sixth drive signal based on the received fourth frequency division signal and a voltage conversion ratio of a corresponding second conversion circuit, and output the fifth drive signal and the sixth drive signal to corresponding second conversion circuits. The fifth drive signal and the sixth drive signal form drive signals of the corresponding second conversion circuits. It should be noted that, when the second conversion circuit is a three-level conversion circuit, the third signal generation module may further generate a seventh drive signal, and the fourth signal generation module may further generate an eighth drive signal, and output the seventh drive signal and the eighth drive signal to corresponding second conversion circuits.

During specific implementation, if a quantity of second conversion circuits is 1, the frequency divider circuit is a divide-by-4 frequency divider.

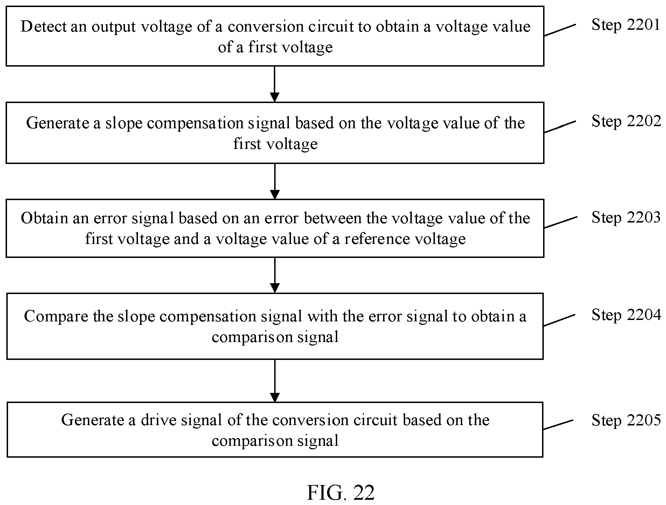

Based on a same invention idea, an embodiment of this application further provides a power conversion method. The method is applied to a power converter. The power converter may include a conversion circuit and a control apparatus connected to the conversion circuit. Refer to FIG. 22. The method specifically includes the following steps.

Step 2201: Detect an output voltage of the conversion circuit to obtain a voltage value of a first voltage.

Step 2202: Generate a slope compensation signal based on the voltage value of the first voltage.

Step 2203: Obtain an error signal based on an error between the voltage value of the first voltage and a voltage value of a reference voltage.

Step 2204: Compare the slope compensation signal with the error signal to obtain a comparison signal.

Step 2205: Generate a drive signal of the conversion circuit based on the comparison signal.

Specifically, a structure of the power converter may be shown in FIG. 4 to FIG. 22. Details are not described herein again in this application.

In a possible implementation, that the slope compensation signal is generated based on the voltage value of the first voltage includes: superposing the voltage value of the first voltage and a slope signal to obtain the slope compensation signal.

In a possible implementation, if the conversion circuit is a two-level conversion circuit, that the drive signal of the conversion circuit is generated based on the comparison signal includes: performing frequency division on the comparison signal to obtain a first frequency division signal and a second frequency division signal; generating a first drive signal based on the first frequency division signal and a voltage conversion ratio of the conversion circuit; and generating a second drive signal based on the second frequency division signal and the voltage conversion ratio of the conversion circuit. The drive signal of the conversion circuit includes the first drive signal and the second drive signal.

In a possible implementation, if the conversion circuit is a three-level conversion circuit, that the drive signal of the conversion circuit is generated based on the comparison signal includes: performing frequency division on the comparison signal to obtain the first frequency division signal and the second frequency division signal; generating the first drive signal and a third drive signal based on the first frequency division signal and the voltage conversion ratio of the conversion circuit; and generating the second drive signal and a fourth drive signal based on the second frequency division signal and the voltage conversion ratio of the conversion circuit.

Based on a same invention idea, an embodiment of this application further provides a power adapter. The power adapter includes a housing, a connection port, and the foregoing power converter.

It should be noted that, for implementations and technical effects that are not described in detail in the power adapter, refer to related descriptions in the power converter. Details are not described herein again.

Based on a same technical idea, an embodiment of this application further provides an electronic device. The electronic device may include a power supply, a load, and the foregoing power converter.

The power converter is connected to a battery, and the power converter may convert an output voltage of the battery to obtain a target voltage, and output the target voltage to the load.

It should be noted that, for implementations and technical effects that are not described in detail in the electronic device, refer to related descriptions in the power converter. Details are not described herein again.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A power converter, comprising a first conversion circuit and a control apparatus connected to the first conversion circuit, wherein the control apparatus is configured to:
detect an output voltage of the first conversion circuit to obtain a voltage value of a first voltage;
generate a slope compensation signal based on the voltage value of the first voltage;
obtain an error signal based on an error between the voltage value of the first voltage and a voltage value of a reference voltage;
compare the slope compensation signal with the error signal to obtain a comparison signal; and
generate a drive signal of the first conversion circuit based on the comparison signal.

2. The power converter according to claim 1, wherein the control apparatus comprises a detection circuit, an amplification circuit, a slope compensation circuit, a comparison circuit, and a signal generation circuit;
an input end of the detection circuit is connected to an output end of the first conversion circuit, an output end of the detection circuit is connected to the slope compensation circuit and the amplification circuit, and the detection circuit is configured to: detect the output voltage of the first conversion circuit to obtain the voltage value of the first voltage, and output the voltage value of the first voltage to the slope compensation circuit and the amplification circuit;
the amplification circuit is connected to the comparison circuit, and the amplification circuit is configured to: amplify the error between the voltage value of the first voltage and the voltage value of the reference voltage to obtain the error signal, and output the error signal to the comparison circuit;
the slope compensation circuit is connected to the comparison circuit, and the slope compensation circuit is configured to generate the slope compensation signal based on the voltage value of the first voltage;
the comparison circuit is connected to the signal generation circuit, and the comparison circuit is configured to: compare the slope compensation signal with the error signal to obtain the comparison signal, and output the comparison signal to the signal generation circuit; and
the signal generation circuit is configured to generate the drive signal of the first conversion circuit based on the comparison signal.

3. The power converter according to claim 2, wherein the slope compensation circuit comprises a slope signal compensation module and a control module;
the slope signal compensation module is separately connected to the detection circuit and the control module, and the slope signal generation module is configured to generate the slope compensation signal based on the voltage value of the first voltage; and
the control module is connected to the comparison circuit, and the control module controls a working state of the slope signal compensation module based on the comparison signal.

4. The power converter according to claim 3, wherein the slope signal compensation module comprises a first switch S1, a second switch S2, a third switch S3, a first current source I1, a second current source I2, and a first capacitor C1;
a first electrode of the first switch S1 is configured to be connected to a first power supply VCC 1, and a second electrode of the first switch S1 is connected to a first end of the first current source I1;
a second end of the first power source I1 is connected to a first end of the first capacitor C1, a first electrode of the second switch S2, and a first electrode of the third switch S3;
a second electrode of the second switch S2 is connected to a second end of the first capacitor C1;
a second electrode of the third switch S3 is connected to a first end of the second current source I2;
a second end of the second current source I2 is connected to the second end of the first capacitor C1;
the second end of the first capacitor C1 is connected to the output end of the detection circuit, and the first end of the first capacitor C1 is connected to the comparison circuit; and
a control electrode of the first switch S1, a control electrode of the second switch S2, and a control electrode of the third switch S3 are all connected to a first control module.

5. The power converter according to claim 4, wherein the control module comprises a first RS flip-flop RS 1, a second RS flip-flop RS 2, a first timer TD 1, a second timer TD 2, and a first phase inverter Z1;
a first end of the first RS flip-flop RS 1 is connected to the comparison circuit, a second end of the first RS flip-flop RS 1 is connected to a first end of the first timer TD 1, and an output end of the first RS flip-flop RS 1 is connected to the control electrode of the first switch S1, an input end of the first phase inverter Z1, and a second end of the first timer TD 1;
a first end of the second RS flip-flop RS 2 is connected to the comparison circuit, a second end of the second RS flip-flop RS 2 is connected to a first end of the second timer TD 2, and an output end of the second RS flip-flop RS 2 is connected to the control electrode of the second switch S2 and a second end of the second timer TD 2; and
an output end of the first phase inverter Z1 is connected to the control electrode of the third switch S3.

6. The power converter according to claim 4, wherein the control module comprises a third RS flip-flop RS 3, a fourth RS flip-flop RS 4, a fifth RS flip-flop RS 5, a third timer TD 3, a fourth timer TD 4, and a fifth timer TD 5;
a first end of the third RS flip-flop RS 3 is connected to the comparison circuit, a second end of the third RS flip-flop RS 3 is connected to a first end of the third timer TD 3 and a first end of the fourth timer TD 4, and an output end of the third RS flip-flop RS 3 is connected to the control electrode of the first switch S1 and a second end of the third timer TD 3;
a first end of the fourth RS flip-flop RS 4 is connected to a second end of the fourth timer TD 4, a second end of the fourth RS flip-flop RS 4 is connected to the comparison circuit, and an output end of the fourth RS flip-flop RS 4 is connected to the control electrode of the third switch S3; and
a first end of the fifth RS flip-flop RS 5 is connected to the comparison circuit, a second end of the fifth RS flip-flop RS 5 is connected to a first end of the fifth timer TD 5, and an output end of the fifth RS flip-flop RS 5 is connected to the control electrode of the second switch S2 and a second end of the fifth timer TD 5.

7. The power converter according to claim 3, wherein the slope signal compensation module comprises a fourth switch S4, a fifth switch S5, a sixth switch S6, a second capacitor C2, a third current source I3, a fourth current source I4, and an adder;
a first electrode of the fourth switch S4 is configured to be connected to a second power supply VCC 2, and a second electrode of the fourth switch S4 is connected to a first end of the third current source I3;
a second end of the third current source I3 is separately connected to a first end of the second capacitor C2, a first electrode of the fifth switch S5, and a first electrode of the sixth switch S6;
a second electrode of the fifth switch S5 is connected to a second electrode of the sixth switch S6;
the second electrode of the sixth switch S6 is connected to a first end of the fourth current source I4;
a second end of the fourth current source I4 is connected to a second end of the second capacitor C2;
the second end of the second capacitor C2 is configured to receive the reference voltage, and the first end of the second capacitor C2 is connected to a first input end of the adder;
a second end of the adder is connected to the detection circuit, and an output end of the adder is connected to the comparison circuit; and
a control electrode of the fourth switch S4, a control electrode of the fifth switch S5, and a control electrode of the sixth switch S6 are all connected to a first control module.

8. The power converter according to claim 7, wherein the adder comprises a fifth current source I5, a seventh switch S7, an eighth switch S8, a ninth switch S9, a tenth switch S10, an eleventh switch S11, a twelfth switch S12, a thirteenth switch S13, a first resistor R1, and a second resistor R2;
a first electrode of the seventh switch S7 is connected to a third power supply VCC 3, a second electrode of the seventh switch S7 is connected to a first electrode of the tenth switch S10 and a first electrode of the eleventh switch S11, and a control electrode of the seventh switch S7 is connected to a control electrode of the eighth switch S8, a control electrode of the ninth switch S9, and a second electrode of the ninth switch S9;
a first electrode of the eighth switch S8 is connected to the third power supply VCC 3, and a second electrode of the eighth switch S8 is connected to a first electrode of the twelfth switch S12 and a first electrode of the thirteenth switch S13;
a first electrode of the ninth switch S9 is connected to the third power supply VCC 3, and the second electrode of the ninth switch S9 is connected to a first end of the fifth current source I5;
a second end of the fifth current source I5 is connected to a ground cable;
a second electrode of the tenth switch S10 is connected to the comparison circuit and a first end of the first resistor R1, and a control electrode of the tenth switch S 10 is connected to the first end of the second capacitor C2;
a second electrode of the eleventh switch S11 is connected to the comparison circuit and a first end of the second resistor R2, and a control electrode of the eleventh switch S11 is configured to receive the reference voltage;
a second electrode of the twelfth switch S12 is connected to the comparison circuit and the first end of the first resistor R1, and a control electrode of the twelfth switch S 12 is connected to the detection circuit;
a second electrode of the thirteenth switch S13 is connected to the comparison circuit and the first end of the second resistor R2, and a control electrode of the thirteenth switch S 13 is configured to receive the reference voltage;
a second end of the first resistor R1 is connected to the ground cable; and
a second end of the second resistor R2 is connected to the ground cable.

9. The power converter according to claim 8, wherein the comparison circuit comprises a fourteenth switch S14, a fifteenth switch S15, a sixteenth switch S16, and a first comparator COMP 1;
a first electrode of the fourteenth switch S14 is connected to the third power supply VCC 3, a second electrode of the fourteenth switch S14 is separately connected to a first electrode of the fifteenth switch S15 and a first electrode of the sixteenth switch S 16, and a control electrode of the fourteenth switch S14 is connected to the control electrode of the seventh switch S7;
a second electrode of the fifteenth switch S15 is connected to a first input end of the first comparator COPM 1, and a control electrode of the fifteenth switch S15 is configured to receive a reference signal;
a second electrode of the sixteenth switch S 16 is connected to a second input end of the first comparator COMP 1, and a control electrode of the sixteenth switch S16 is connected to the amplification circuit; and
the first input end of the first comparator COMP 1 is connected to the second electrode of the tenth switch S10 and the second electrode of the twelfth switch S12, the second input end of the first comparator COMP 1 is connected to the second electrode of the eleventh switch S11 and the second electrode of the thirteenth switch S13, and an output end of the first comparator COMP 1 is connected to the signal generation circuit.

10. The power converter according to claim 2, wherein the signal generation circuit comprises a frequency division module, a first signal generation module, and a second signal generation module;
an input end of the frequency division module is connected to the comparison circuit, an output end of the frequency division module is connected to the first signal generation module and the second signal generation module, and the frequency division module is configured to: perform frequency division processing on the comparison signal to obtain a first frequency division signal and a second frequency division signal, output the first frequency division signal to the first signal generation module, and output the second frequency division module to the second signal generation module;
if the first conversion circuit is a two-level conversion circuit, the first signal generation module is configured to generate a first drive signal based on the first frequency division signal and a voltage conversion ratio of the first conversion circuit, and
the second signal generation module is configured to generate a second drive signal based on the second frequency division signal and the voltage conversion ratio of the first conversion circuit; and
the drive signal of the first conversion circuit comprises the first drive signal and the second drive signal.

11. The power converter according to claim 10, wherein the first signal generation module comprises a first on-time control module and a first logic module;
the first on-time control module is connected to an input end of the first conversion circuit, the output end of the first conversion circuit, and the frequency division module, and the first on-time control module is configured to: after receiving the first frequency division signal, generate a first on-time control signal based on a comparison result between an input voltage of the first conversion circuit and the output voltage of the first conversion circuit;
the first logic module is separately connected to the first on-time control module and the frequency division module, and generates the first drive signal based on the first on-time control signal and the first frequency division signal;
the second signal generation module comprises a second on-time control module and a second logic module;
the second on-time control module is connected to the input end of the first conversion circuit, the output end of the first conversion circuit, and the frequency division module, and the second on-time control module is configured to: after receiving the second frequency division signal, generate a second on-time control signal based on the comparison result between the input voltage of the first conversion circuit and the output voltage of the first conversion circuit; and
the second logic module is separately connected to the second on-time control module and the frequency division module, and generates the second drive signal based on the second on-time control signal and the second frequency division signal.

12. The power converter according to claim 11, wherein the first on-time control module comprises a third resistor R3, a fourth resistor R4, a fifth resistor R5, a seventeenth switch S17, a third capacitor C3, a second comparator COMP 2, an eighth RS flip-flop RS 8, and an eighth timer TD 8;
a first end of the third resistor R3 is connected to the output end of the first conversion circuit, and a second end of the third resistor R3 is connected to a first end of the fourth resistor R4;
the first end of the fourth resistor R4 is connected to a first input end of the second comparator COMP 2, and a second end of the fourth resistor R4 is connected to a ground cable;
a first end of the fifth resistor R5 is connected to the input end of the first conversion circuit, and a second end of the fifth resistor R5 is connected to a first electrode of the seventeenth switch S17 and a first end of the third capacitor C3;
the first end of the third capacitor C3 is connected to a second input end of the second comparator COMP 2, and a second end of the third capacitor C3 is connected to the ground cable;
a second electrode of the seventeenth switch S17 is connected to the ground cable, and a control circuit of the seventeenth switch S 17 is connected to an output end of the eighth RS flip-flop RS 8;
an output end of the second comparator COMP 2 is connected to the first logic module and a first end of the eighth timer TD 8; and
a first input end of the eighth RS flip-flop RS 8 is connected to the output end of the frequency division module, and a second input end of the eighth RS flip-flop RS 8 is connected to a second end of the eighth timer TD 8.

13. The power converter according to claim 11 or 12, wherein if the first conversion circuit is the two-level conversion circuit, the first logic module comprises a ninth RS flip-flop RS 5; and
a first input end of the ninth RS flip-flop RS 5 is connected to the output end of the frequency division module, a second input end of the ninth RS flip-flop RS 5 is connected to the first on-time control module, and an output end of the ninth RS flip-flop RS 5 is configured to: connect to a first group of switches of the first conversion circuit, and output the first drive signal to the first group of switches, wherein the first group of switches is configured to control inductor charging in the first conversion circuit.

14. The power converter according to claim 13, wherein if the first conversion circuit is a three-level conversion circuit, the first logic module comprises a tenth RS flip-flop RS 10 and a third phase inverter Z3;
a first input end of the tenth RS flip-flop RS 10 is connected to the output end of the frequency division module, a second input end of the tenth RS flip-flop RS 10 is connected to the first on-time control module, and an output end of the tenth RS flip-flop RS 10 is configured to: connect to the first group of switches of the first conversion circuit, and output the first drive signal to the first group of switches;
an input end of the third phase inverter Z3 is connected to the output end of the tenth RS flip-flop RS 10, and an output end of the third phase inverter Z3 is connected to a third group of switches, and outputs a third drive signal to the third group of switches;
the first group of switches, a second group of switches, the third group of switches, and a fourth group of switches are connected in series, a first end of a first switch is a first input end of the first conversion circuit, and a second end of the fourth group of switches is a second output end of the first conversion circuit; and
the first drive signal received by the first group of switches, the second drive signal received by the second group of switches, the third drive signal received by the third group of switches, and a fourth drive signal received by the fourth group of switches form the drive signal of the first conversion circuit.

15. The power converter according to claim 8, wherein the control apparatus is further connected to at least one second conversion circuit, an output end of each second conversion circuit is connected in parallel to the output end of the first conversion circuit, and the signal generation circuit further comprises a third signal generation module and a fourth signal generation module that correspond to each second conversion circuit;
a frequency division module is connected to each third signal generation module and each fourth signal generation module, and the frequency division module is further configured to: perform frequency division processing on the comparison signal, and obtain a third frequency division signal that one-to-one corresponds to each third signal generation module and a fourth frequency division signal that one-to-one corresponds to each fourth signal generation module;
each third signal generation module is connected to the frequency division module, and the third signal generation module is configured to: receive a corresponding third frequency division signal, and generate a fifth drive signal based on the received third frequency division signal and a voltage conversion ratio of a corresponding second conversion circuit; and
the fourth signal generation module is connected to the frequency division module, and the fourth signal generation module is configured to: receive a corresponding fourth frequency division signal, generate a sixth drive signal based on the received fourth frequency division signal and a voltage conversion ratio of a corresponding second conversion circuit, and
output the fifth drive signal and the sixth drive signal to corresponding second conversion circuits.

16. The power converter according to any one of claims 1 to 15, wherein the control apparatus further comprises a voltage divider circuit; and
an input end of the voltage divider circuit is connected to the output end of the first conversion circuit, an output end of the voltage divider circuit is connected to the input end of the detection circuit, and the voltage divider circuit is configured to: perform voltage step-down processing on the output voltage of the first conversion circuit to obtain the first voltage, and output the first voltage to the detection circuit.

17. A power conversion method, comprising:
detecting an output voltage of a conversion circuit to obtain a voltage value of a first voltage;
generating a slope compensation signal based on the voltage value of the first voltage;
obtaining an error signal based on an error between the voltage value of the first voltage and a voltage value of a reference voltage;
comparing the slope compensation signal with the error signal to obtain a comparison signal; and
generating a drive signal of the conversion circuit based on the comparison signal.

18. The method according to claim 17, wherein the generating a slope compensation signal based on the voltage value of the first voltage comprises:
superposing the voltage value of the first voltage and a slope signal to obtain the slope compensation signal.

19. The method according to claim 17 or 18, wherein if the conversion circuit is a two-level conversion circuit, the generating a drive signal of the conversion circuit based on the comparison signal comprises:
performing frequency division on the comparison signal to obtain a first frequency division signal and a second frequency division signal;
generating a first drive signal based on the first frequency division signal and a voltage conversion ratio of the conversion circuit; and
generating a second drive signal based on the second frequency division signal and the voltage conversion ratio of the conversion circuit, wherein
the drive signal of the conversion circuit comprises the first drive signal and the second drive signal.

20. The method according to claim 19, wherein if the conversion circuit is a three-level conversion circuit, the generating a drive signal of the conversion circuit based on the comparison signal comprises:
performing frequency division on the comparison signal to obtain the first frequency division signal and the second frequency division signal;
generating the first drive signal and a third drive signal based on the first frequency division signal and the voltage conversion ratio of the conversion circuit; and
generating the second drive signal and a fourth drive signal based on the second frequency division signal and voltage conversion of the conversion circuit.

21. A power adapter, comprising a housing, a connection port, and the power converter according to any one of claims 1 to 16.

22. An electronic device, comprising a battery, a load, and the power converter according to any one of claims 1 to 16, wherein
the power converter is connected to the battery, and the power converter is configured to: convert an output voltage of the battery to obtain a target voltage, and output the target voltage to the load.
